(19) Europäisches Patentamt
European Patent Office
Office européen des brevets

(11) **EP 4 549 505 A1**

(12) **EUROPEAN PATENT APPLICATION**

(43) Date of publication:
**07.05.2025 Bulletin 2025/19**

(21) Application number: **23207988.9**

(22) Date of filing: **06.11.2023**

(51) International Patent Classification (IPC):
**C08K 3/04** *(2006.01)*     **C09C 1/48** *(2006.01)*
**C09C 1/50** *(2006.01)*     **C09C 1/56** *(2006.01)*

(52) Cooperative Patent Classification (CPC):
**C09C 1/50; C09C 1/48; C09C 1/56; C09C 1/565;
C09D 7/61; C09D 11/037; C09D 11/324;**
C01P 2006/12; C01P 2006/19; C01P 2006/80;
C08K 3/04; C08K 2201/006

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: Orion Engineered Carbons GmbH
65760 Eschborn (DE)

(72) Inventors:
• MONAKHOVA, Yulia
  50354 Hürth (DE)
• WAIDMANN, Guido
  50374 Erftstadt (DE)
• KRAUSS, Kai
  63796 Kahl am Main (DE)

(74) Representative: f & e patent
Braunsberger Feld 29
51429 Bergisch Gladbach (DE)

(54) **ALKALINE CARBON BLACK, PREPARATION THEREOF AND COMPOSITIONS AND ARTICLES CONTAINING THE SAME**

(57) It is provided an alkaline gas black or oxidatively aftertreated carbon black and related compositions and articles made therefrom. Also disclosed is a process for producing the alkaline blacks, based on a thermal aftertreatment in an inert atmosphere. The provided alkaline blacks represent an interesting alternative to corresponding conventionally acidic gas blacks or oxidized carbon blacks in various applications, including e.g. as pigments in inks, paints or coating compositions.

Fig. 4

**(Cont. next page)**

EP 4 549 505 A1

**Description**

TECHNICAL FIELD

The present disclosure relates to alkaline carbon blacks, more specifically alkaline gas blacks or oxidatively aftertreated carbon blacks, applications thereof, and related compositions and articles made therefrom. Also disclosed is a process for producing alkaline carbon blacks according to the present disclosure, based on a thermal aftertreatment in an inert atmosphere. The alkaline carbon blacks according to the present disclosure are particularly useful as black pigment in various applications.

TECHNICAL BACKGROUND

Carbon blacks are widely employed in industry as an additive for various different applications, for example as a coloring agent or pigment, reinforcing filler or conductive agent in the manufacture of paints, coatings, inks, electrodes or plastic or rubber articles. Depending on the respective application, carbon blacks with different properties are required, which can be controlled by the carbon black production process and possible aftertreatment. Carbon blacks are produced by controlled thermal or thermal-oxidative decomposition of hydrocarbon precursors such as oils, natural gas or acetylene. Established carbon black production processes include the furnace black process, the gas black process, the lamp black process, the acetylene black process or the thermal black process.

In the gas black process feedstock oil is heated in a vaporizer and the resultant vapors are carried by a hydrogen-rich gas into a gas tube that is fitted with a multiplicity of burners. The individual flames impinge on the surface of a water-cooled drum, where formed carbon black is deposited. As a result of contact with oxygen at high temperatures during the production process, significant amounts of oxygen-containing functional groups are formed on the surface of the gas black particles. Gas blacks accordingly generally have a notable oxygen content and volatiles content. The formed oxygen-containing functional groups are mostly acidic (e.g. carboxyl, anhydride, phenolic groups) such that as-produced gas blacks are generally acidic. Gas blacks are appreciated for their coloristic properties and good dispersibility and specifically used as black pigment e.g. for coatings and printing inks.

Carbon blacks from other production processes such as furnace blacks have as-produced typically only low oxygen content. Oxidative aftertreatment using for example nitrogen dioxide, ozone or other oxidants allows to further increase the content of oxygen-containing surface groups significantly, which may be used for example for increasing the hydrophilicity of the carbon black, improving wettability and dispersibility in binders or rheological properties for pigment applications. Carbon black aftertreatment by oxidation forms again mostly surface oxides with an acidic character, represented by e.g. carboxyl, anhydride and phenolic groups, such that the oxidatively aftertreated carbon blacks are conventionally acidic.

For some applications the acidic character of conventional gas blacks and oxidatively aftertreated carbon blacks may however be disadvantageous. For example, many common coatings formulations like typical water-borne coatings system are formulated to have an alkaline pH such that addition of a basic substance may be required for pH control and to neutralize the acidic groups of the carbon black component. Use of such basic substance and pH control increases costs and adds to complexity of the production process. Moreover, there may be environmental and/or toxicological hazards or concerns for commonly used basic substances for pH control like dimethylethanolamine (DMEA). Therefore, it would be desirable to reduce the amount of basic substance for pH control in formulation of the carbon black containing compositions or avoid it completely.

Moreover, it is known that carbon blacks formed or aftertreated under oxidative conditions may among the polycyclic aromatic hydrocarbons (PAHs) contaminating carbon blacks include relatively high amounts of oxygenated PAHs such as oxy-PAHs or PAHs that have one or more nitro functional groups, also referred to as nitro-PAHs. Nitro-PAHs and oxy-PAH compounds are believed to be hazardous to health especially due to their ascribed mutagenicity (cf. e.g. Peter P. Fu and Diogenes Herreno-Saenz: "Nitro-polycyclic aromatic hydrocarbons: A class of genotoxic environmental pollutants", Journal of Environmental Science and Health, Part C: Environmental Carcinogenesis and Ecotoxicology Reviews, Vol. 17, No. 6, 1999, pages 1-43; A. Clergé, J. Le Goff, C. Lopez, J. Ledauphin, R. Delépée (2019): "Oxy-PAHs: occurrence in the environment and potential genotoxic/mutagenic risk assessment for human health", Critical Reviews in Toxicology). Accordingly, it would also be desirable to reduce or avoid such potentially harmful contaminants in gas blacks or oxidatively aftertreated carbon blacks, if possible, without adversely affecting properties relevant for the respective application, such as established coloristic and processing properties.

Accordingly, it is an objective of the present invention to provide a carbon black, which allows alleviating or avoiding at least some of the afore-mentioned disadvantages of the prior art. Provision of the carbon black should be achievable in an efficient and economic manner making use of readily available components and processing techniques. The present invention aims in particular to provide carbon blacks useful as a ready-to-use-substitute to conventional acidic gas blacks and oxidatively aftertreated carbon blacks which enable formulation of compositions more benign to the environment and human health and with reduced or no need for costly and potentially harmful basic substances for pH control, at comparable or even improved application performance.

SUMMARY OF INVENTION

It has now surprisingly been found that the above objective can be achieved by provision of a carbon black as specified in appended independent claim 1.

The present invention accordingly relates to an alkaline carbon black (also referred to herein as alkaline black). The alkaline carbon black is an alkaline gas black or oxidatively aftertreated carbon black having a pH as determined according to ASTM D1512-21 (Test Method B - Sonic Slurry) of greater than 7 and a ratio of oil absorption number (OAN) (in ml/100g), determined according to ASTM D2414-23, to volatile content (in wt.%), determined by heating to 950 °C according to DIN 53552:2023-07, of 50 or more.

Furthermore, the present invention is also drawn towards a process for producing an alkaline black as specified above and in more detail below. The process comprises:

(a) providing an acidic carbon black comprising an initial content of titratable acidic surface groups, wherein providing the acidic carbon black comprises manufacturing gas black by the gas black production process or comprises manufacturing carbon black by a carbon black production process and subjecting the produced carbon black to an oxidative aftertreatment, and

(b) subjecting the acidic carbon black to a thermal aftertreatment comprising heat treating the acidic carbon black in an inert atmosphere to reduce the content of titratable acidic surface groups to form the alkaline black.

The invention also concerns a composition comprising an alkaline black as specified above and in more detail below, for example produced by the afore-mentioned process, without being limited thereto.

Articles made from an alkaline black as specified above and in more detail below or composition comprising the same are also within the scope of the invention.

Moreover, the present invention relates to the use of an alkaline black as specified above and in more detail below as pigment, conductive agent or reinforcing filler, for example in the manufacture of plastic or rubber articles, paints, inks, coatings, electrodes or energy storage.

The alkaline carbon black material according to the invention can be obtained from commercially available ingredients using common processing techniques in an efficient manner at low costs. The alkaline carbon black has been found to enable effective use in formulations, including e.g. water-based ink or coating compositions, at reduced or no need for costly and potentially harmful basic substances for pH control and without adversely affecting application performance compared to conventional acidic gas blacks and oxidatively aftertreated carbon blacks. The alkaline carbon blacks of the present invention thus provide ready-to-use-substitutes to conventional acidic gas blacks and oxidatively aftertreated carbon blacks which enable formulation of compositions more benign to the environment and human health and at reduced costs.

These and other optional features and advantages of the present invention are described in more detail in the following description.

DESCRIPTION OF DRAWINGS

Figure 1a shows the TPD-MS spectra of Carbon Black C of the Examples. Figure 1b shows the TPD-MS spectra of Carbon Black C thermally aftertreated (800°C) as described in the Examples.

Figure 2 shows a survey (top) and high-resolution C1s (middle) and O1s (bottom) XPS spectra of Carbon Black C of the Examples.

Figure 3 shows a survey (top) and high-resolution C1s (middle) and O1s (bottom) XPS spectra of Carbon Black C thermally aftertreated (800°C) as described in the Examples.

Figure 4 shows a survey (top) and high-resolution C1s (middle) and O1s (bottom) XPS spectra of Carbon Black C thermally aftertreated as described in the Examples at higher temperature (900°C).

DETAILED DESCRIPTION

As used herein, the term "comprising" is understood to be open-ended and to not exclude the presence of additional undescribed or unrecited elements, materials, ingredients or method steps, or the like. The terms "including", "containing" and like terms are understood to be synonymous with "comprising". As used herein, the term "consisting of" is understood to exclude the presence of any unspecified element, ingredient or method step or the like.

As used herein, the singular form of "a", "an", and "the" include plural referents unless the context clearly dictates otherwise.

Unless indicated to the contrary, the numerical parameters and ranges set forth in the following specification and appended claims are approximations. Notwithstanding that the numerical ranges and parameters setting forth the broad scope of the invention are approximations, the numerical values set forth in the specific examples are reported as precisely as possible. Any numerical values, however, contain errors necessarily resulting from the standard deviation in their respective measurement.

Also, it should be understood that any numerical range recited herein is intended to include all subranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g., 1 to 6.3, or 5.5 to 10, or 2.7 to 6.1.

All parts, amounts, concentrations, etc. referred to herein are by weight, unless specified otherwise.

As used herein, the term "carbon black" relates to a material composed substantially, e.g., to more than 80 wt.%, or more than 90 wt.% or more than 95 wt.%, based on its total weight of carbon that is produced by thermal oxidative pyrolysis or cleavage from one or more than one hydrocarbon precursor(s) as a feedstock. Different industrial processes are known for the production of carbon blacks such as the furnace process, gas black process, acetylene black process, thermal black process or lamp black process, as for example described in J.-B. Donnet et al., "Carbon Black: Science and Technology", 2nd edition.

As used herein, the term "alkaline" refers to a basic nature, i.e. the designated material exhibiting a pH value of greater than 7.0. As used herein, the term "acidic" refers to an acidic nature, i.e. the designated material exhibiting a pH value of less than 7.0.

As mentioned above, the present disclosure relates to an alkaline carbon black (also shortly referred to herein as alkaline black). More specifically, the alkaline carbon black according to the present invention is an alkaline gas black or oxidatively aftertreated carbon black. "Gas black" means herein a carbon black produced by a gas black process as described above and in further detail e.g. in J.-B. Donnet et al., "Carbon Black: Science and Technology", 2nd edition. "Oxidatively aftertreated carbon black" means herein a carbon black, obtained by any production process such as those mentioned above, which has in addition been subjected to an oxidative post-treatment, as also described e.g. in J.-B. Donnet et al., "Carbon Black: Science and Technology", 2nd edition. For example, the alkaline carbon black according to the present invention can comprise an oxidatively aftertreated furnace black. As discussed above, conventional gas blacks or oxidatively aftertreated carbon blacks contain a significant amount of oxygen-containing functional groups, but these are mostly acidic resulting in an acidic nature of the black. By way of contrast, the alkaline carbon blacks of the present invention represent a gas black or oxidatively aftertreated carbon black, which has been modified to have an alkaline nature.

The alkaline carbon black according to the present invention has a pH as determined according to ASTM D1512-21 (Test Method B - Sonic Slurry) of greater than 7 and a ratio of oil absorption number (OAN) (in ml/100g), determined according to ASTM D2414-23, to volatile content (in wt.%), determined by heating to 950 °C according to DIN 53552:2023-07, of 50 or more. Surprisingly, the inventors have found by diligent studies that such carbon blacks with an alkaline nature and the given ratio of OAN to volatile content, which may be considered as a parameter related to the structure and degree of oxidation respectively polarity of a carbon black, provide interesting substitutes to conventional acidic gas blacks and oxidatively aftertreated carbon blacks which may overcome certain deficiencies of the latter and provide benefits as outlined above.

The alkaline carbon blacks of the present disclosure can have a pH of 7.1 or more, such as 7.5 or more, such as 8.0 or more, such as 8.5 or more, such as 9.0 or more, such as 9.5 or more, such as 10.0 or more. The alkaline carbon blacks of the present disclosure can have a pH of lower than 13.0, such as 12.5 or less, such as 12.0 or less, such as 11.5 or less, such as 11.0 or less. The alkaline carbon blacks of the present disclosure can have a pH in a range between any of the above-mentioned values, such as in the range from greater than 7 to 13.0, or from 7.1 to 12.5, or from 7.5 to 12.0 or from 8.0 to 10.0. Preferably, the alkaline carbon black of the present disclosure has a pH of 7.5 or more, such as in a range from 7.5 to 11.0. The pH of the alkaline carbon blacks can be determined according to ASTM D1512-21 (Test Method B - Sonic Slurry).

The alkaline carbon blacks of the present disclosure can comprise titratable basic surface groups. The alkaline carbon blacks of the present disclosure can for example have titratable basic surface groups in an amount of at least 20 mmol/kg, such as 50 mmol/kg or more, or 80 mmol/kg or more, or 100 mmol/kg or more, or 150 mmol/kg or more, or 200 mmol/kg or more. The alkaline carbon blacks of the present disclosure can for example have titratable basic surface groups in an amount of 1,000 mmol/kg or less, such as 800 mmol/kg or less, or 700 mmol/kg or less, or 600 mmol/kg or less, or 500 mmol/kg or less, or 450 mmol/kg or less. The alkaline carbon blacks of the present disclosure can comprise titratable basic surface groups in an amount in a range between any of the above-mentioned values, such as in a range from 20 to 1,000 mmol/kg, or from 50 to 800 mmol/kg, or from 80 to 600 mmol/kg, or from 100 to 500 mmol/kg. The amount of titratable basic surface groups can be determined by titration according to the procedure described in the experimental section below.

The titratable basic surface groups of the alkaline carbon blacks of the present disclosure can in particular comprise pyrone groups. Preferably, the titratable basic surface groups can predominantly comprise or substantially consist of or consist of pyrone groups. Thus, for instance, 85% or more of all titratable basic surface groups, or 95% or more of all titratable basic surface groups, or even 100% of all titratable basic surface groups can be pyrone groups.

A quantification of the amount of pyrone groups can be achieved for example by XPS analysis. For the quantification of the amount of pyrone groups from XPS the following equation 1 can be taken:

$$A = O_S * O_P/100 \qquad (1)$$

where,

$O_S$ = Atomic concentration (at.%) of oxygen from XPS survey spectra
$O_P$ = Sum of percentage of areas from the peaks in the O1s XPS spectra contributing to pyrone groups (531.6 eV (O-(C=O*)-C) and 533.1 eV (O*-(C=O)-C)) based on total peak area in the O1s XPS spectra
$A$ = Amount (at.%) of oxygen bound in pyrone groups.

The alkaline carbon blacks of the present disclosure can accordingly be characterized by the atomic concentration of oxygen bound in pyrone groups determined as indicated above through the XPS survey and high-resolution spectra of O1s. The amount of oxygen bound in pyrone groups quantified from XPS spectra with equation (1) may serve as an indicator for the degree of pyrone groups. The alkaline carbon blacks of the present disclosure can in particular have an atomic concentration of oxygen bound in pyrone groups determined by XPS analysis as set forth above of 0.1 at.% or more, or 0.2 at.% or more, or 0.3 at.% or more, or 0.4 at.% or more, or 0.5 at.% or more, or 0.6 at.% or more, or 1.0 at.% or more. The alkaline carbon blacks of the present disclosure can for example have an atomic concentration of oxygen bound in pyrone groups of 10 at.% or less, or 7 at.% or less, or 5 at.% or less, or 3 at.% or less, or 2 at.% or less, or 1.5 at.% or less. The alkaline carbon blacks of the present disclosure can have an atomic concentration of oxygen bound in pyrone groups in a range between any of the above-mentioned values, such as in a range from 0.1 to 10 at.%, or from 0.3 to 3 at.%, or from 0.5 to 1.5 at.%.

The alkaline carbon blacks of the present disclosure can optionally comprise titratable acidic surface groups. Examples of possible acidic surface groups comprise carboxyl, anhydride lactone, or phenolic groups. Due to the overall alkaline nature, it is however to be understood that the titratable basic surface groups will generally be predominant in the carbon blacks of the present invention. The amount of acidic titratable acidic surface groups, if present at all, will thus typically be less than the amount of titratable basic surface groups. For instance, the alkaline carbon blacks of the present disclosure can comprise acidic titratable acidic surface groups in an amount of 50% or less, such as 30% or less, or 20% or less, or 10% or less, or 5% or less, or 3% or less, or 2% or less, or 1 % or less, of the amount of titratable basic surface groups. The alkaline carbon blacks of the present disclosure can for example comprise titratable acidic surface groups in an amount of 200 mmol/kg or less, such as 100 mmol/kg or less, or 50 mmol/kg or less, or 20 mmol/kg or less, or 10 mmol/kg or less. The alkaline carbon black of the present disclosure can comprise no titratable acidic surface groups, i.e. be essentially free of acidic surface groups. The amount of titratable acidic surface groups can be determined by titration according to the procedure described in the experimental section below.

The alkaline carbon blacks of the present disclosure can further be characterized by an oil absorption number (OAN) (in ml/100g). The OAN provides a measure for the structure of the carbon black. The OAN can be determined according to ASTM D2414-23. The alkaline carbon black of the present disclosure can for examples have an oil absorption number (OAN) of 50 ml/100 g or more, such as 60 ml/100 g or more, or 70 ml/100 g or more, or 80 ml/100 g or more, or 90 ml/100 g or more, or 100 ml/100 g or more, or 110 ml/100 g or more, or 120 ml/100 g or more, or 130 ml/100 g or more, or 140 ml/100 g or more, or 150 ml/100 g or more. The alkaline carbon blacks of the present disclosure can for example have an oil absorption number of 300 ml/100 g or less, such as 290 ml/100 g or less, or 280 ml/100 g or less, or 270 m l/100 g or less, or 260 ml/100 g or less, or 250 ml/100 g or less, or 240 ml/100 g or less, or 230 ml/100 g or less, or 220 ml/100 g or less, or 210 ml/100 g or less, or 200 ml/100 g or less, or 190 ml/100 g or less, or 180 ml/100 g or less, or 170 ml/100 g or less, or 160 ml/100 g or less. The alkaline carbon blacks of the present disclosure can have an oil absorption number in a range between any of the above-mentioned values. For example, the alkaline carbon blacks of the present disclosure can have an oil absorption number in the range of 50 ml/100 g to 300 ml/100 g, such as 60 ml/100 g to 290 ml/100 g, such as 70 ml/100 g to 280 ml/100 g, such as 80 ml/100 g to 270 ml/100 g, such as 90 ml/100 g to 260 ml/100 g, such as 100 ml/100 g to 250 ml/100 g, such as 110 ml/100 g to 240 ml/100 g, such as 110 ml/100 g to 230 ml/100 g, such as 120 ml/100 g to 220 ml/100 g, such as 130 ml/100 g to 210 ml/100 g.

The alkaline carbon black of the present disclosure can further be characterized by a volatile content. The volatile content can be determined by heating to 950 °C according to DIN 53552:2023-07. The alkaline carbon black of the present disclosure can for example have a volatile content of 0.5 wt.% or more, such as 1.0 wt.% or more, or 1.5 wt.% or more, or 2.0 wt.% or more, or 2.5 wt.% or more. The alkaline carbon blacks of the present disclosure can have a volatile content of 5.0 wt.% or less, such as 4.5 wt.% or less, or 4.0 wt.% or less, or 3.5 wt.% or less. The alkaline carbon blacks of the present disclosure can have a volatile content in a range between any of the above-mentioned values. For example, the alkaline carbon black of the present disclosure can have a volatile content in the range of 0.5 wt.% to 5.0 wt.%, such as from 1.0 wt.% to 4.5 wt.%, or from 1.5 wt.% to 4.0 wt.%

As set forth above, it is to be understood though that the oil absorption number (OAN) and volatile content yield a ratio of (OAN) (in ml/100g)/volatile content (in wt.%) of 50 or more for the carbon blacks of the present invention. This combined parameter relates to the structure and degree of oxidation respectively polarity of a carbon black. It increases with increasing structure and decreasing volatile content in the carbon black, or vice versa decreases with reduction in structure and the greater the volatile content in the carbon black. The ratio of (OAN) (in ml/100g)/volatile content (in wt.%) can accordingly be adjusted e.g. by selection of the starting material and controlling the conditions of a thermal treatment to form the alkaline carbon black as described in more detail below. The alkaline carbon blacks of the present invention can have a ratio of oil absorption number (OAN) (in ml/100g), determined according to ASTM D2414-23, to volatile content (in wt.%), determined by heating to 950 °C according to DIN 53552:2023-07, of 55 or more, such as 60 or more, or 65 or more. The alkaline carbon blacks of the present invention can have a ratio of oil absorption number (OAN) (in ml/100g), determined according to ASTM D2414-23, to volatile content (in wt.%), determined by heating to 950 °C according to DIN 53552:2023-07, of 200 or less, such as 180 or less, or 150 or less, or 140 or less, or 130 or less, or 120 or less. The alkaline carbon blacks of the present disclosure can have a ratio of (OAN) (in ml/100g)/volatile content (in wt.%) in a range between any of the above-mentioned values. For example, the alkaline carbon blacks can have a ratio of (OAN) (in ml/100g)/volatile content (in wt.%) in the range from 50 to 200, such as from 55 to 150, or from 60 to 120.

The alkaline carbon blacks of the present disclosure can further be characterized by the ratio of $sp^2$ hybridized carbon atoms to $sp^3$ hybridized carbon atoms. The $sp^2/sp^3$ ratio of carbon atoms may serve as an indicator for the degree of structural order and disorder such as surface defects. The alkaline carbon blacks of the present disclosure can in particular have a $sp^2/sp^3$ ratio of 2.0 or more, such as 2.5 or more, such as 3.0 or more, such as 3.5 or more, such as 4.0 or more, such as 5.0 or more. The alkaline carbon blacks of the present disclosure can for example have a $sp^2/sp^3$ ratio of 50 or less, such as 20 or less, or 10 or less. The alkaline carbon blacks of the present disclosure can have a $sp^2/sp^3$ ratio in a range between any of the above-mentioned values. For example, the alkaline carbon black of the present disclosure can have a $sp^2/sp^3$ ratio in a range from 2 to 50 or from 5 to 10. The ratio of $sp^2$ hybridized carbon atoms to $sp^3$ hybridized carbon atoms can be determined from XPS spectra as outlined in the experimental part below.

The alkaline carbon blacks of the present disclosure can further be characterized by having an ash content. The ash content can be determined according to ASTM D1506-15. The alkaline carbon blacks of the present disclosure can have an ash content of 10 wt.% or less, such as 5 wt.% or less, or 3 wt.% or less, or 2 wt.% or less, or 1.5 wt.% or less, or 1 wt.% or less. The alkaline carbon blacks of the present disclosure can for example have an ash content of 0.01 wt.% or more, such as 0.05 wt.% or more, or 0.1 wt.% or more, or 0.2 wt.% or more. The alkaline carbon blacks of the present disclosure can for example have an ash content in a range between any of the above-mentioned values such as in a range from 0.01 wt.% to 5 wt.%, or from 0.05 wt.% to 3 wt.%, or from 0.1 wt.% to 2 wt.%, or from 0.2 wt.% to 1 wt.%.

The alkaline carbon blacks of the present disclosure can in addition or alternatively be characterized by a moisture content. The moisture content can be determined according to ASTM D1509-18. The alkaline carbon blacks of the present disclosure can for example have a moisture content of 3 wt.% or less, or 2 wt.% or less, or 1.5 wt.% or less, or 1 wt.% or less. The alkaline carbon blacks of the present disclosure can for example have a moisture content of 0.1 wt.% or more, such as 0.2 wt.% or more, or 0.3 wt.% or more, or 0.5 wt.% or more. The alkaline carbon blacks of the present disclosure can for example have a moisture content in a range between any of the above-mentioned values such as in a range from 0.1 wt.% to 3 wt.%, or from 0.2 wt.% to 2 wt.%, or from 0.3 wt.% to 1 wt.%.

In addition or alternatively, the alkaline carbon blacks of the present disclosure can be characterized by the carbon content. The carbon content can be determined by elemental analysis. The alkaline carbon blacks of the present disclosure can for example have a carbon content of 90 wt.% or more, such as 91 wt.% or more, or 92 wt.% or more, or 93 wt.% or more, or 94 wt.% or more, or 95 wt.% or more, or 96 wt.% or more, or 97 wt.% or more, or 98 wt.% or more. The alkaline carbon blacks of the present disclosure can for example have a carbon content of 99 wt.% or less, or 98 wt.% or less, or 97 wt.% or less, or 96 wt.% or less, or 95 wt.% or less. The alkaline carbon blacks of the present disclosure can for example have a carbon content in a range between any of the above-mentioned values such as in a range from 90 to 99 wt.%, or from 91 to 98 wt.%, or from 95 to 99 wt.%.

In addition or alternatively, the alkaline carbon blacks of the present disclosure can be characterized by the oxygen content. The oxygen content can also be determined by elemental analysis. The alkaline carbon blacks of the present disclosure can for example have an oxygen content of 0.1 wt.% or more, such as 0.3 wt.% or more, or 0.5 wt.% or more, or 1 wt.% or more, or 1.5 wt.% or more. The alkaline carbon blacks of the present disclosure can for example have an oxygen content of 5 wt.% or less, or 4 wt.% or less, or 3 wt.% or less, or 2.5 wt.% or less, or 2 wt.% or less. The alkaline carbon black of the present disclosure can for example have an oxygen content in a range between any of the above-mentioned values such as in a range from 0.1 to 5 wt.%, or from 0.3 to 3 wt.%, or from 0.5 to 2.5 wt. %, or from 1 to 2 wt.%.

The alkaline carbon blacks of the present disclosure can in addition or alternatively be characterized by a BET surface area. The BET surface area can be determined by nitrogen adsorption according to ASTM D6556-21. The alkaline carbon black of the present disclosure can for example have a BET surface area of 30 $m^2/g$ or more, such as 50 $m^2/g$ or more, or 80 $m^2/g$ or more, or 100 $m^2/g$ or more, or 120 $m^2/g$ or more, or 150 $m^2/g$ or more, or 200 $m^2/g$ or more. The alkaline carbon black of the present disclosure can for example have a BET surface area of 1,000 $m^2/g$ or less, such as 900 $m^2/g$ or less, or 800 $m^2/g$ or less, or 700 $m^2/g$ or less. The alkaline carbon black of the present disclosure can for example have a BET surface area in a range between any of the above-mentioned values. For example, the alkaline carbon black can have a BET surface area in a range from 30 to 1,000 $m^2/g$, such as from 50 to 900 $m^2/g$, or from 80 to 800 $m^2/g$, or from 100 to 700 $m^2/g$.

The alkaline carbon blacks of the present disclosure can in addition or alternatively be characterized by a statistical thickness surface area (STSA). The statistical thickness surface area (STSA) can be determined according to ASTM D6556-21. The alkaline carbon black of the present disclosure can for example have a STSA of 30 $m^2/g$ or more, such as 50 $m^2/g$ or more, or 80 $m^2/g$ or more, or 90 $m^2/g$ or more, or 100 $m^2/g$ or more, or 120 $m^2/g$ or more, or 150 $m^2/g$ or more. The alkaline carbon black of the present disclosure can for example have a STSA of 600 $m^2/g$ or less, such as 550 $m^2/g$ or less, or 500 $m^2/g$ or less, or 450 $m^2/g$ or less, or 400 $m^2/g$ or less, or 350 $m^2/g$ or less. The alkaline carbon black of the present disclosure can for example have a STSA in a range between any of the above-mentioned values. For example, the alkaline carbon black can have a STSA in a range from 30 to 600 $m^2/g$, such as from 50 to 550 $m^2/g$, or from 80 to 400 $m^2/g$, or from 90 to 350 $m^2/g$.

Further, the alkaline carbon blacks of the present disclosure can in addition or alternatively be characterized by a ratio of BET surface area to STSA. For example, the alkaline carbon black of the present disclosure can have a ratio of BET surface area to STSA of 1 or more, such as 1.1 or more, or 1.2 or more, or 1.3 or more. The alkaline carbon black of the present disclosure can for example have a ratio of BET surface area to STSA of 4 or less, such as 3.5 or less, or 3.0 or less, or 2.8 or less, or 2.6 or less. The alkaline carbon black of the present disclosure can have a ratio of BET surface area to STSA in a range between any of the above-mentioned values such as from 1 to 4, or from 1.1 to 3.5, or from 1.2 to 3.0, or from 1.1 to 2.6.

The alkaline carbon black of the present disclosure can moreover advantageously exhibit relatively low levels of oxygenated polycyclic aromatic hydrocarbons (PAHs) as compared to conventional as-prepared acidic gas blacks or oxidatively aftertreated carbon blacks.

The term "polycyclic aromatic hydrocarbons (PAHs)" as used herein refers to organic compounds having a skeleton with two or more, such as two to seven, fused aromatic rings, i.e. a polycyclic aromatic structure. Hydrocarbon groups such as alkyl groups can optionally be bound to the skeleton of fused aromatic rings. As used herein, "polycyclic aromatic hydrocarbons (PAHs)" refers to non-substituted compounds having such a polycyclic aromatic structure, that is respective compounds consisting of carbon and hydrogen atoms only. On the contrary, oxygenated polycyclic aromatic hydrocarbons (PAHs) refers to oxygenated derivatives of PAHs that consist not only of carbon and hydrogen, but contain in addition oxygen and optionally other heteroatoms such as nitrogen. One particular class of oxygenated PAH compounds includes for example PAH compounds that have one or more than one nitro functional group(s) ($-NO_2$), which are referred herein as nitro-PAHs. "Oxy-polycyclic aromatic hydrocarbons", also referred to shortly as "oxy-PAHs", as used herein refer to another class of oxygenated PAH compounds that consist not only of carbon and hydrogen, but contain in addition oxygen. In other words, oxy-PAHs represent organic compounds, which have a skeleton with two or more, such as two to seven, fused aromatic rings and which consist of carbon, hydrogen and oxygen atoms. For instance, oxy-PAHs can be derived from unsubstituted PAHs by substituting one or more hydrogen atom(s) by an oxygen-containing functional group, such as a carboxyl, aldo, hydroxyl or keto group. Oxy-PAHs include for example polycyclic aromatic ketones, polycyclic aromatic quinones, hydroxylated PAHs, polycyclic aromatic carboxaldehydes, polycyclic aromatic carboxylic acids and anhydrides, and polycyclic aromatic lactones.

For the purpose of the present invention, the content of oxy-PAH or nitro-PAH of a carbon black can more specifically refer to the content of a specific group of oxy-PAH or nitro-PAH compounds, such as the oxy-PAH6 or nitro-PAH8 group, as defined infra. Accordingly, a content of oxy-PAH or nitro-PAH of a carbon black indicated herein can in particular mean a content of the compounds of the oxy-PAH6 (also referred to as oxy-PAH6 content) or of the nitro-PAH8 group (also referred to as nitro-PAH8 content), respectively.

"Nitro-PAH8" as used herein refers to the group of the following eight nitro-functional PAH compounds: 1-nitronaphthalene (CAS no. 86-57-7), 2-nitronaphthalene (CAS no. 581-89-5), 9-nitrophenanthrene (CAS no. 954-46-1), 3-nitrofluoranthene (CAS no. 892-21-7), 1-nitropyrene (CAS no. 5522-43-0), 1,3-dinitropyrene (CAS no. 75321-20-9), 1,6-dinitropyrene (CAS no. 42397-64-8) and 4-nitrobiphenyl (CAS no. 92-93-3). Accordingly, the nitro-PAH8 content is determined as the sum of the amounts of these eight compounds based on the total weight of a carbon black sample. The nitro-PAH8 content of a carbon black sample can be determined by analyzing a toluene extract obtained by Soxhlet extraction of the carbon black sample by GC-MS utilizing deuterated forms of nitro-PAH8 compounds for calibration as set forth in the examples.

"Oxy-PAH6" as used herein refers to the group of the following six oxy-PAH compounds: 9,10-phenanthrendione (CAS no. 84-11-7), 6H-benzo[cd]pyren-6-one (CAS no. 3074-00-8), benzanthrone (CAS no. 82-05-3), benzo[b]fluoren-11-one (CAS no. 3074-03-01), 9-fluorenone (CAS no. 486-25-9) and 4H-cyclopenta[def]phenanthren-4-one (CAS no. 5737-13-3). Accordingly, the oxy-PAH6 content is determined as the sum of the amounts of these six compounds based on the total weight of a carbon black sample. The oxy-PAH6 content of a carbon black sample can be determined analogously to the determination of the nitro-PAH8 content by analyzing a toluene extract obtained by Soxhlet extraction of the carbon black sample by GC-MS utilizing deuterated forms of oxy-PAH6 compounds for calibration.

The alkaline carbon black of the present disclosure can have a nitro-PAH content, such as a nitro-PAH8 content, of 1 ppm or less, such as 0.5 ppm or less, or 0.2 ppm or less, or 0.1 ppm or less. In addition or alternatively, the alkaline carbon black of the present disclosure can have an oxy-PAH content, such as an oxy-PAH6 content, of 1 ppm or less, such as 0.5 ppm or less, or 0.2 ppm or less, or 0.1 ppm or less.

The alkaline carbon blacks according to the invention can be obtained from commercially available raw materials using common equipment and processing technology in an efficient manner at low costs.

For instance, as set forth above, alkaline carbon blacks according to the invention can be produced by a process comprising:

(a) providing an acidic carbon black comprising an initial content of titratable acidic surface groups, wherein providing the acidic carbon black comprises manufacturing gas black by the gas black production process or comprises manufacturing carbon black by a carbon black production process and subjecting the produced carbon black to an oxidative aftertreatment, and

(b) subjecting the acidic carbon black to a thermal aftertreatment comprising heat treating the acidic carbon black in an inert atmosphere to reduce the content of titratable acidic surface groups to form the alkaline black.

Accordingly, an acidic carbon black is provided to be then converted into the alkaline carbon black according to the present disclosure. The acidic carbon black can be a gas black. It can be provided by the gas black production process, which is as such well known and e.g. described in J.-B. Donnet et al., "Carbon Black: Science and Technology", 2nd edition. Gas blacks as obtained from the gas black process generally comprise an initially high volatile content and a high concentration of mainly acidic oxygen-containing functional groups on the surface of gas black particles. Gas blacks that can be used in the practice of the current invention are available from Orion Engineered Carbons GmbH for example under the trademarks SPECIAL BLACK, COLOUR BLACK, PRINTEX or NIPEX. Non-limiting illustrative examples include for instance COLOUR BLACK FW1, PRINTEX U or NIPEX 160, all commercially available from Orion Engineered Carbons GmbH.

Alternatively, the acidic carbon black used as a starting material to be transformed to the alkaline product according to the present disclosure can be any carbon black that has been subjected to an oxidative aftertreatment. The carbon black that is subjected to an oxidative aftertreatment can be provided by any process for the production of carbon black. Different industrial processes for the production of carbon blacks are available and include e.g. the furnace process, gas black process, acetylene black process, thermal black process or lamp black process, as for example described in J.-B. Donnet et al., "Carbon Black: Science and Technology", 2nd edition. The carbon black that is subjected to an oxidative aftertreatment can accordingly for example comprise or be a gas black, a furnace black, a thermal black, a lamp black, a channel black, an acetylene black, a recycled black or a combination of any of the foregoing. Recycled blacks are carbon blacks obtained from end-of-use carbon black-containing products, such as waste tires, and obtainable by recycling processes, typically involving two steps, a pyrolysis step for the decomposition of organic components such as rubbers or plastics and a demineralization step for dissolving inorganic additives or impurities. A wide variety of carbon blacks with different properties that can be used in the present invention are commercially available from carbon black manufacturers such as for example Cabot Corporation, Mitsubishi Chemical Company, Tokai Carbon, Denka, Birla Carbon or Orion Engineered Carbons GmbH. Non-limiting examples thereof include carbon blacks marketed under the SPECIAL BLACK, COLOUR BLACK, PRINTEX®, HIBLACK®, ECORAX®, PUREX®, AROSPERSE®, CORAX®, NIPEX® or NEROX® brands by ORION Engineered Carbons GmbH.

The oxidative aftertreatment can be accomplished in any manner known for the oxidation of carbon blacks. The oxidative aftertreatment generally comprises oxidizing the as-produced starting carbon black with an oxidizing agent. The oxidative aftertreatment can for example be accomplished by treatment with an oxidizing agent such as oxygen gas, ozone, $NO_x$, peroxides such as hydrogen peroxide, persulfates such as sodium and potassium persulfates, hypohalites such as sodium hypochlorite, nitric acid, and transition metal-containing oxidants such as permanganate salts, osmium tetroxide, chromium oxides, ceric ammonium nitrates, and mixtures or combinations thereof.

Oxidative aftertreatment can for example be accomplished by treatment with oxidizing agents including oxygen gas, ozone, peroxides such as hydrogen peroxide, persulfates such as sodium and potassium persulfates, hypohalites such as sodium hypochlorite, nitric acid, and transition metal-containing oxidates such as permanganate salts, osmium tetroxide, chromium oxides, ceric ammonium nitrates, and mixtures thereof. According to the present disclosure, the oxidative aftertreatment may in particular utilize a gaseous oxidizing agent. Preferably the oxidizing agent comprises ozone, $NO_x$ or a mixture or combination thereof.

Carbon blacks that have been subjected to an oxidative aftertreatment, also referred to as "oxidized carbon blacks", comprise similar to as-produced gas blacks a notable concentration of mainly acidic oxygen-containing functional groups. The oxygen-containing functional groups can be exemplified, but are not limited to, alcohol, quinone, carboxyl, phenol, lactol, lactone, anhydride, chinone, peroxidic, ether, and ketone groups. In case of a gas black, the amount of oxygen-containing functional groups can be further increased by an oxidative aftertreatment. A wide variety of oxidized carbon blacks with different properties that can be used in the present invention are commercially available from carbon black manufacturers such as for example Cabot Corporation, Mitsubishi Chemical Company, Tokai Carbon, Denka, Birla Carbon or Orion Engineered Carbons GmbH. Non-limiting examples of oxidized carbon blacks that can be used in the practice of the present invention are for instance SPECIAL BLACK 4, SPECIAL BLACK 5, SPECIAL BLACK 6, SPECIAL BLACK 250, COLOUR BLACK FW 200, COLOUR BLACK FW 2, COLOUR BLACK FW 255, or COLOUR BLACK FW 310, all commercially available from Orion Engineered Carbons GmbH.

The acidic carbon black that is provided to be then converted into an alkaline carbon black according to the present disclosure can accordingly be any conventional gas black or any carbon black that has been subjected to an oxidative aftertreatment (which is optional for gas blacks initially comprising already a notable concentration of oxygen-containing functional groups). For example, the carbon black provided in step (a) can thus comprise a carbon black which has been subjected to an oxidative aftertreatment, or a gas black which has not been subjected to an oxidative treatment. For example, the carbon black provided in step (a) can comprise a gas black or an oxidatively aftertreated furnace black.

As set forth above, the carbon black that is provided in step (a) is an acidic carbon black. It accordingly has a pH of less than 7.0. The acidic carbon black preferably has a pH of 6.0 or less, such as 5.0 or less, or 4.5 or less, or 4.0 or less, or 3.5 or less. The acidic carbon black can have a pH of 1.0 or more, such as 1.5 or more, or 2.0 or more. The acidic carbon black can have a pH in a range between any of the above-mentioned values, such as in the range from greater than 1.0 to 6.0, or from 1.5 to 4.5, or from 1.5 to 4.0 or from 2.0 to 3.5. The pH of the acidic carbon black can be determined according to ASTM D1512-21 (Test Method B - Sonic Slurry).

The acidic carbon black that is provided in step (a) comprises an initial content of titratable acidic surface groups. "Initial content of titratable acidic groups" as used herein refers to the content of titratable acidic groups prior to subjecting the acidic carbon black to a thermal aftertreatment in step (b). The acidic carbon black can for example have an initial content of titratable acidic surface groups of 200 mmol/kg or more, such as 300 mmol/kg or more, or 400 mmol/kg or more, or 500 mmol/kg or more, or 700 mmol/kg or more, or 1,000 mmol/kg or more. The acidic carbon black can for example comprise an initial content of titratable acidic surface groups in an amount of 5,000 mmol/kg or less, such as 4,000 mmol/kg or less, or 3,000 mmol/kg or less, or 2,500 mmol/kg or less, or 2,000 mmol/kg or less. The acidic carbon blacks of the present disclosure can comprise an initial content of titratable acidic surface groups in an amount in a range between any of the above-mentioned values, such as in a range from 200 to 5,000 mmol/kg, or from 300 to 4,000 mmol/kg, or from 400 to 3,000 mmol/kg, or from 400 to 2,500 mmol/kg. The amount of titratable acidic surface groups can be determined by titration according to the procedure described in the experimental section below.

The acidic carbon black that is provided in step (a) can further be characterized by a volatile content. The volatile content can be determined by heating to 950 °C according to DIN 53552:2023-07. The acidic carbon black can for example have a volatile content of 0.8 wt.% or more, such as 1.0 wt.% or more, or 1.5 wt.% or more, or 2.0 wt.% or more, or 2.5 wt.% or more, or 3.0 wt.% or more, or 4.0 wt.% or more, or 5.0 wt.% or more, or 6.0 wt.% or more. The acidic carbon black can have for example have a volatile content of up to 25.0 wt.%, such as 22.0 wt.% or less, or 20.0 wt.% or less, or 18.0 wt.% or less, or 15.0 wt.% or less, or 12 wt.% or less, or 10 wt.% or less. The acidic carbon black can have a volatile content in a range between any of the above-mentioned values. For example, the acidic carbon black can have a volatile content in a range from 0.8 wt.% to 25.0 wt. %, such as from 5.0 wt.% to 22.0 wt.%, or from 6.0 wt.% to 20.0 wt.%.

The acidic carbon black that is provided in step (a) can in addition or alternatively be characterized by having an ash content. The ash content can be determined according to ASTM D1506-15. The acidic carbon black can have an ash content of 3 wt.% or less, such as 2 wt.% or less, or 1 wt.% or less, or 0.5 wt.% or less, or 0.4 wt.% or less. The acidic carbon black can for example have an ash content of 0.01 wt.% or more, such as 0.02 wt.% or more, or 0.05 wt.% or more, or 0.1 wt.% or more. The acidic carbon black can have an ash content in a range between any of the above-mentioned values such as in a range from 0.01 wt.% to 3 wt.%, or from 0.02 wt.% to 1 wt.%, or from 0.05 wt.% to 0.4 wt%.

The acidic carbon black that is provided in step (a) can in addition or alternatively be characterized by a moisture content. The moisture content can be determined according to ASTM D1509-18. The acidic carbon black can for example have a moisture content of 10 wt.% or less, or 9 wt.% or less, or 8 wt.% or less, or 7 wt.% or less, or 6 wt.% or less, or 5 wt.% or less. The acidic carbon black can for example have a moisture content of 0.5 wt.% or more, such as 1 wt.% or more, or 1.5 wt.% or more, or 2 wt.% or more. The acidic carbon blacks can have a moisture content in a range between any of the above-mentioned values such as in a range from 0.5 wt.% to 10 wt.%, or from 1 wt.% to 8 wt.%, or from 2 wt.% to 7 wt.%.

In addition or alternatively, the acidic carbon black that is provided in step (a) can be characterized by the carbon content. The carbon content can be determined by elemental analysis. The acidic carbon black can for example have a carbon content of 80 wt.% or more, such as 85 wt.% or more, or 90 wt.% or more, or 95 wt.% or more, or 97 wt.% or more, or 98 wt.% or more. The acidic carbon black can for example have a carbon content of 99 wt.% or less, or 97 wt.% or less, or 95 wt.% or less, or 94 wt.% or less, or 93 wt.% or less, or 92 wt.% or less, or 91 wt.% or less, or 90 wt.% or less. The acidic carbon black can for example have a carbon content in a range between any of the above-mentioned values such as in a range from 80 to 99 wt.%, or from 85 to 95 wt.%, or from 90 to 97 wt.%.

The acidic carbon black that is provided in step (a) can in addition or alternatively be characterized by the oxygen content. The oxygen content can also be determined by elemental analysis. The acidic carbon black can for example have an oxygen content of 20 wt.% or less, such as 15 wt.% or less, or 10 wt.% or less, or 9 wt.% or less, or 8 wt.% or less, or 7 wt.% or less, or 6 wt.% or less, or 5 wt.% or less. The acidic carbon black can for example have an oxygen content of 0.5 wt.% or more, such as 1 wt.% or more, or 2 wt.% or more, or 3 wt.% or more, or 4 wt.% or more, or 5 wt.% or more. The acidic carbon black can for example have an oxygen content in a range between any of the above-mentioned values such as in a range from 0.5 to 20 wt.%, or from 1 to 15 wt.%, or from 2 to 10 wt.%, or from 5 to 15 wt.%.

The acidic carbon black that is provided in step (a) can in addition or alternatively be characterized by a BET surface area. The BET surface area can be determined by nitrogen adsorption according to ASTM D6556-21. The acidic carbon black can for example have a BET surface area of 30 $m^2$/g or more, such as 50 $m^2$/g or more, or 80 $m^2$/g or more, or 100 $m^2$/g or more, or 120 $m^2$/g or more, or 150 $m^2$/g or more, or 200 $m^2$/g or more. The acidic carbon black can for example have a BET surface area of 1,000 $m^2$/g or less, such as 900 $m^2$/g or less, or 800 $m^2$/g or less, or 700 $m^2$/g or less. The acidic carbon black can for example have a BET surface area in a range between any of the above-mentioned values. For example, the acidic carbon black can have a BET surface area in a range from 30 to 1,000 $m^2$/g, such as from 50 to 900 $m^2$/g, or from 80 to 800 $m^2$/g, or from 100 to 700 $m^2$/g.

The acidic carbon black that is provided in step (a) can in addition or alternatively be characterized by a statistical thickness surface area (STSA). The statistical thickness surface area (STSA) can be determined according to ASTM D6556-21. The acidic carbon black can for example have a STSA of 30 $m^2$/g or more, such as 50 $m^2$/g or more, or 80 $m^2$/g or more, or 90 $m^2$/g or more, or 100 $m^2$/g or more, or 120 $m^2$/g or more, or 150 $m^2$/g or more. The acidic carbon black can for example have a STSA of 600 $m^2$/g or less, such as 550 $m^2$/g or less, or 500 $m^2$/g or less, or 450 $m^2$/g or less, or 400 $m^2$/g or less, or 350 $m^2$/g or less. The acidic carbon black can for example have a STSA in a range between any of the above-mentioned values. For example, the acidic carbon black can have a STSA in a range from 30 to 600 $m^2$/g, such as from 50 to 550 $m^2$/g, or from 80 to 400 $m^2$/g, or from 90 to 350 $m^2$/g.

Further, the acidic carbon black that is provided in step (a) can in addition or alternatively be characterized by a ratio of BET surface area to STSA. For example, the acidic carbon black of the present disclosure can have a ratio of BET surface area to STSA of 0.8 or more, such as 1.0 or more, or 1.1 or more, or 1.2 or more. The acidic carbon black can for example have a ratio of BET surface area to STSA of 4 or less, such as 3.5 or less, or 3.0 or less, or 2.8 or less, or 2.5 or less. The acidic carbon black can have a ratio of BET surface area to STSA in a range between any of the above-mentioned values such as from 0.8 to 4, or from 1.1 to 3.5, or from 1.1 to 3.0, or from 1.1 to 2.5.

The acidic carbon black that is provided in step (a) can also, in addition or alternatively, be characterized by an oil absorption number (OAN) (in ml/100g). The OAN can be determined according to ASTM D2414-23. The acidic carbon black can for examples have an oil absorption number (OAN) of 50 ml/100 g or more, such as 70 ml/100 g or more, or 80 ml/100 g or more, or 100 ml/100 g or more. The acidic carbon black can for example have an oil absorption number of 300 ml/100 g or less, such as 250 ml/100 g or less, or 220 ml/100 g or less, or 200 ml/100 g or less, or 180 ml/100 g or less, or 160 ml/100 g or less. The acidic carbon black can have an oil absorption number in a range between any of the above-mentioned values. For example, the acidic carbon black can have an oil absorption number in the range of 50 ml/100 g to 300 ml/100 g, such as 70 ml/100 g to 250 ml/100 g, or 80 ml/100 g to 200 ml/100 g, or 100 ml/100 g to 180 ml/100 g.

Furthermore, the acidic carbon black that is provided in step (a) can in addition or alternatively be characterized by the ratio of oil absorption number (OAN) (in ml/100g), determined according to ASTM D2414-18, to volatile content (in wt.%), determined by heating to 950 °C according to DIN 53552:2023-07. The acidic carbon black typically has a ratio of oil absorption number (OAN) (in ml/100g) to volatile content (in wt.%) of less than 90, such as 80 or less, or 70 or less, or 60 or less. Preferably, the acidic carbon black has a ratio of oil absorption number (OAN) (in ml/100g) to volatile content (in wt.%) of 50 or less, such as 40 or less, such as 30 or less, or 25 or less, or 20 or less. The acidic carbon black can for example have a ratio of oil absorption number (OAN) (in ml/100g) to volatile content (in wt.%) of 3 or more, or 5 or more, or 7 or more, or 8 or more, or 9 or more, or 10 or more. The acidic carbon black can have a ratio of oil absorption number (OAN) (in ml/100g) to volatile content (in wt.%) in a range between any of the above-mentioned values. For example, the acidic carbon black can have a ratio of oil absorption number (OAN) (in ml/100g) to volatile content (in wt.%) in a range from 3 to less than 90, such as from 4 to 40, or from 5 to 30.

The acidic carbon black that is provided in step (a) can in addition or alternatively have a ratio of $sp^2$ hybridized carbon atoms to $sp^3$ hybridized carbon atoms of less than 2.0, such as 1.8 or less, or 1.6 or less.

The acidic carbon black that is provided in step (a) can contain a notable amount of oxygenated PAHs as contaminants. The acidic carbon black can thus for instance have a nitro-PAH content, such as a nitro-PAH8 content, of 10 ppm or more, such as 20 ppm or more, or 50 ppm or more, or 100 ppm or more. In addition or alternatively, the acidic carbon black can have an oxy-PAH content, such as an oxy-PAH6 content, of 10 ppm or more, such as 20 ppm or more, or 50 ppm or more, or 100 ppm or more.

The acidic carbon black, which has been described above, is then subjected to a thermal aftertreatment. The thermal aftertreatment comprises heat treating the acidic carbon black in an inert atmosphere to reduce the content of titratable acidic surface groups to form the alkaline black. An inert atmosphere is to be understood as referring to an atmosphere which is substantially free of gases that are reactive towards the carbon black. Examples of reactive gases include e.g. oxygen, $NO_x$, $SO_x$, ozone or halogens. Substantially free of reactive gases means that the respective atmosphere does not contain reactive gases or only as incidental impurities. The concentration of reactive gases, if present as incidental impurities, can for example be less than 100 ppm, such as less than 10 ppm, or less than 1 ppm, or less than 0.1 ppm, or less than 0.01 ppm.

The inert atmosphere in which the acidic carbon black is heat treated can in particular comprise or be made of an inert gas. Suitable non-limiting examples of inert gases that can be used include helium, nitrogen, neon, argon, or mixtures thereof. For cost reasons, nitrogen, argon or mixtures thereof are preferably used. The inert atmosphere may also comprise application of a vacuum.

The thermal aftertreatment may in particular comprise heat treating the acidic carbon black in the inert atmosphere at a temperature of 500 °C or more, such as 600 °C or more, or 700 °C or more, or 800 °C or more. The thermal aftertreatment can comprise heat treating the acidic carbon black in the inert atmosphere at a temperature of not more than 1,200 °C, or not more than 1,100 °C, or not more than 1,000 °C. The thermal aftertreatment can comprise heat treating the acidic carbon black at a temperature in a range between any of the recited values. The acidic carbon black can for example be heat treated in step (b) at a temperature in a range from 500°C to 1,000°C, preferably from 700°C to 1,000°C, more preferably from 800 to 900°C.

Heat treating the acidic carbon black in the inert atmosphere can be conducted for any suitable duration. For instance, heat treating the acidic carbon black in the inert atmosphere can be conducted for a duration of 1 minute or more, such as 5 minutes or more, or 10 minutes or more, or 20 minutes or more, or 30 minutes or more, or 45 minutes or more, or 1 hour or more. Heat treating the acidic carbon black in the inert atmosphere can for example be conducted for a duration of up to 72 hours, such as 48 hours or less, or 24 hours or less, or 10 hours or less, or 6 hours or less, or 4 hours or less, or 2 hours or less. The acidic carbon black can be heat treated in the inert atmosphere for a duration in a range between any of the recited values such as for a duration in the range of 1 minute to 72 hours, such from 10 minutes to 2 hours, or from 20 minutes to 1 hour.

Without being bound to any theory, it is believed that acidic surface groups such as carboxyl or anhydride groups are by tendency thermally less stable than certain basic surface groups such as pyrone groups and that accordingly the acidic surface groups initially present in the heat treated carbon black gradually decompose and/or transform into thermally more stable basic surface groups, ultimately converting the initially acidic carbon black into an alkaline carbon black as described herein. The ratio of (OAN) (in ml/100g)/volatile content (in wt.%) can herein be controlled e.g. by selection of the starting material and controlling the conditions of the thermal treatment applied to form the alkaline carbon black as described above and illustrated in the examples. For instance, more severe conditions for the heat treatment, such as higher temperature and/or longer duration, will cause a more pronounced degradation of e.g. oxygen-containing acidic surface groups and associated release of volatile compounds such as CO and/or $CO_2$, while the structure (OAN) remains relatively stable.

Optionally, the thermal aftertreatment can further comprise heat treating the carbon black that has been heat treated in the inert atmosphere in an oxygen-containing atmosphere at a lower temperature than used for the heat treatment in the inert atmosphere. The oxygen-containing atmosphere can for example comprise oxygen in a concentration of 1 vol.% or more, such as 5 vol.% or more, such as 10 vol.% or more, such as 15 vol.% or more, such as 20 vol.% or more. Non-limiting examples for the oxygen-containing include e.g. air, oxygen-enriched air, oxygen-depleted air, or gas mixtures comprising oxygen and one or more other gases such as inert gases as mentioned above. Such optional heat treatment of the carbon black in an oxygen-containing atmosphere at a moderate temperature may further facilitate a formation of basic surface groups such as pyrone groups.

Heat treating the carbon black in an oxygen-containing atmosphere can for example be conducted at a temperature of 40°C or more, such as 50°C or more, or 60°C or more, or 80°C or more, or 100°C or more. The carbon black can be heat treated in the oxygen-containing atmosphere for examples at a temperature of 300°C or less, such as 250°C or less, or 200°C or less, or 150°C or less, or 120°C or less. Heat treating the carbon black in the oxygen-containing atmosphere can be conducted at a temperature in a range between any of the recited values such as at a temperature in a range from 40 °C to 300 °C, such as from 50 °C to 150 °C, or from 80 °C to 120 °C.

Heat treating the carbon black in the oxygen-containing atmosphere, if applied, can be conducted for any suitable duration. For instance, heat treating the carbon black in the oxygen-containing atmosphere can be conducted for a duration of 1 minute or more, such as 5 minutes or more, or 10 minutes or more, or 20 minutes or more, or 30 minutes or more, or 45 minutes or more, or 1 hour or more. Heat treating the carbon black in the oxygen-containing atmosphere can for example be conducted for a duration of up to 72 hours, such as 48 hours or less, or 24 hours or less, or 10 hours or less, or 6 hours or less, or 4 hours or less, or 2 hours or less. The carbon black can be heat treated in the oxygen-containing atmosphere for a duration in a range between any of the recited values such as for a duration in the range of 1 minute to 72 hours, such from 10 minutes to 2 hours, or from 20 minutes to 1 hour.

Adjusting the temperature to the above-mentioned temperature used for heat treating the carbon black in the inert atmosphere, or optionally in the oxygen-containing atmosphere, for a suitable duration as specified above can be achieved by heating-up or cooling-down according to the respective needs. The temperature can be adjusted herein in any suitable manner, e.g. linearly or non-linearly and/or with any suitable rate, which may depend on the available equipment and its limitations. The average rate of the change in temperature can for example be in a range from 1 K/min to 100 K/min, such as from 5 K/min to 50 K/min.

The thermal aftertreatment to transform a provided initially acidic carbon black into an alkaline carbon black as described herein can be carried out with any equipment available for heat treating solid materials under conditions as set out herein. For example, the thermal aftertreatment of the acidic carbon black can be conducted in a convective oven, electric oven, infrared oven, gas fired oven, vacuum oven, conveyor oven, batch oven, fixed bed reactor or fluidized bed reactor without being limited thereto. The thermal aftertreatment can preferably comprise subjecting the treated carbon black to a continuous gas flow, such as of the inert atmosphere or the oxygen-containing atmosphere. The pressure of the atmosphere(s) in which the heat treatment is carried out is not particularly limited and can be varied. For instance, the inert atmosphere and/or the oxygen-containing atmosphere can have a pressure in a range from 1 mPa to 1 MPa, such as 1 Pa to 200 kPa.

The alkaline carbon blacks of the present invention, which are obtainable e.g. by a process involving thermal aftertreatment of an initially acidic carbon black as set forth above, can be used in various different applications, where carbon blacks are commonly used, specifically where conventional acidic gas blacks and oxidatively aftertreated carbon blacks are commonly used. For instance, the alkaline carbon black can be used as pigment, conductive agent or reinforcing filler, for example for the manufacture of rubber or plastics compositions and articles, coatings, inks such as printing inks or inkjet inks, toners, lacquers, coatings, electrodes or energy storage devices.

The alkaline carbon blacks of the present invention can accordingly be formulated with further ingredients to form compositions such as a plastic or rubber composition, a paint, ink or coating composition or electrode composition. From such compositions various articles of manufacture can be produced, such as plastic or rubber articles, coatings, electrodes etc. Formulation of the compositions and manufacture of articles therefrom can be achieved using existing technology and is therefore not further described herein.

The alkaline carbon blacks of the present invention may provide herein certain benefits or advantages e.g. compared to conventional acidic gas blacks and oxidatively aftertreated carbon blacks as described herein. For instance, formulations such as water-based ink or coating compositions, can be provided with the alkaline carbon black of the present invention at reduced or no need for costly and potentially harmful basic substances for pH control and without adversely affecting application performance compared to conventional acidic gas blacks and oxidatively aftertreated carbon blacks. The alkaline carbon blacks of the present invention therefore can provide ready-to-use-substitutes to conventional acidic gas blacks and oxidatively aftertreated carbon blacks which may enable formulation of compositions more benign to the environment and human health and/or at reduced costs.

The invention will now be further illustrated by the following Examples. It is to be understood that the Examples are included for the sake of illustration, and are not to be construed as limiting to the present invention. In particular, the sought scope of protection shall not be limited by the specific Examples disclosed hereinafter, but is rather to be given the full breadth of the appended claims including any equivalents thereof.

EXAMPLES

All parts and percentages indicated throughout the Examples refer to weight, unless specified otherwise.

Used acidic carbon blacks

The following acidic carbon blacks A-G were provided as reference materials and used to prepare alkaline carbon blacks by thermal aftertreatment as described below.

Carbon black A: Gas black, commercially available under the trademark COLOUR BLACK FW 1 from Orion Engineered Carbons GmbH.

Carbon black B: Carbon black A, oxidatively aftertreated with $NO_x$.

Carbon black C: Carbon black B, further oxidatively aftertreated with $NO_x$.

Carbon black D: Gas black, commercially available under the trademark PRINTEX U from Orion Engineered Carbons GmbH.

Carbon black E: Carbon black D, oxidatively aftertreated with $NO_x$.

Carbon black F: Carbon black D, oxidatively aftertreated with ozone.

Carbon black G: Oxidatively aftertreated furnace black, commercially available under the trademark COLOUR BLACK FW 255 from Orion Engineered Carbons GmbH.

Some properties of the used carbon blacks (CB) A-G, determined according to the methods described below, are summarized in Table 1. As can be seen, carbon blacks A-G were all acidic and had a more or less pronounced substantial initial content of titratable acidic surface groups. The ratio OAN (in ml/100g)/volatile content (in wt.%) was about 20 or less.

Table 1

| CB | Ash content [wt.%] | Moisture content [wt.%] | OAN [ml/100g] | BET [m²/g] | STSA [m²/g] | Volatile content [wt.%] | pH | Acidic surface groups [mmol/kg] | OAN/ volatile content |
|---|---|---|---|---|---|---|---|---|---|
| A | 0.02 | 4.4 | 150 | 323 | 206 | 7.4 | 3.3 | 482 | 20.3 |
| B | 0.01 | 6.9 | 155 | 501 | 219 | 17.3 | 2.3 | 1,929 | 9.0 |
| C | 0.01 | 4.4 | 160 | 586 | 244 | 21 | 2.3 | 2,382 | 7.6 |
| D | 0.09 | 3.0 | 115 | 114 | 96 | 8.2 | 3.2 | 312 | 14.0 |
| E | 0.01 | 4.1 | 115 | 202 | 85 | 14.5 | 2.8 | 1,267 | 7.9 |
| F | 0.01 | 4.8 | 130 | 180 | 88 | 13.2 | 2.9 | 1,141 | 9.8 |
| G | 0.11 | 6.0 | 108 | 596 | 343 | 11.3 | 2.6 | 1,394 | 9.5 |

Characterization of carbon blacks

The ash content of the carbon blacks was determined according to ASTM D1506-15.
The moisture content of the carbon blacks was determined according to ASTM D1509-18.
The oil absorption number (OAN) of the carbon blacks was determined according to ASTM D2414-23.
The BET surface area was determined by nitrogen adsorption according to ASTM D6556-21.
The statistical thickness surface area (STSA) of the carbon blacks was determined according to ASTM D6556-21.
The content of volatiles was determined by heating to 950°C according to DIN 53552:2023-07.
The pH was measured according to ASTM D1512-21 (Test Method B - Sonic Slurry).
The content of titratable acidic surface groups per unit mass of carbon black was determined by titration according to the following protocol: The carbon black was dried overnight in a drying oven at a temperature of 125°C. The hot carbon black material was removed from the oven and allowed to cool down in a desiccator containing a desiccant. In a dried Erlenmeyer flask $m_{CB}=1.5\pm0.1$ g of the respective carbon black was weighed and a volume (V1) of 50 mL of 0.1 molar aqueous sodium ethylate ($NaOC_2H_5$) solution (Titrisol grade diluted in bi-distilled water) were added. Air inside the flask was then replaced by purging with nitrogen gas and the flask tightly sealed. The flask was then placed in a holding device and shaken in a shaking machine for 24 hours at 100 rpm. After that, the resulting suspension was left to stand for one hour to allow the carbon black to settle on the bottom. Afterwards, the supernatant solution was pressure filtered using nitrogen gas at a pressure of 5 bar through a polyether sulfone filter with 0.1 $\mu$m pore size and collected in a beaker, which was immediately closed with a cover. A volume (V2) of 10 mL of the filtrate were taken by a pipette and transferred to another beaker for titration. To this volume of the filtered-out solution a volume of 30 mL of 0.025 molar sulfuric acid

($H_2SO_4$) (Titrisol grade diluted in bi-distilled water) were added. Subsequently, the sample was titrated back to pH 7.0 using 0.05 molar sodium hydroxide solution (Titrisol grade diluted in bi-distilled water). The required volume of sodium hydroxide solution ($V_{NaOH}$) was determined in mL at a precision of three decimal places. A blank value determination was carried out for each analysis by following the above-described procedure, but without adding the carbon black. The consumed volume of sodium hydroxide solution for the blank titration was determined accordingly as $V_{blank}$. Before each series of measurements, the pH electrode was calibrated using temperature sensor and buffer solutions having a pH of 10.00 and 4.00, and additionally checked with buffer solution having a pH of 7.00. The concentration of acidic surface groups per unit mass of carbon black (in mmol/kg) was calculated on the basis of the used mass of carbon black (mcs) in grams, volumes V1 and V2 and determined values of $V_{NaOH}$ and $V_{blank}$ (each in ml) according to the following formula:

$$[Acidic\ surface\ groups] = V1 \cdot \frac{V_{NaOH} - V_{blank}}{V2 \cdot m_{CB}} \cdot 0.05 \cdot 1000$$

The content of titratable basic surface groups per unit mass of carbon black was determined by titration according to the procedure as described above for the determination of the acidic surface groups, but adding to the weighed mass of carbon black 50 mL (V1) of 0.025 molar sulfuric acid ($H_2SO_4$) instead of 0.1 molar aqueous sodium ethylate ($NaOC_2H_5$) solution. The concentration of basic surface groups per unit mass of carbon black (in mmol/kg) was then calculated on the basis of the used mass of carbon black (mcs) in grams, volumes V1 and V2 and determined values of $V_{NaOH}$ and $V_{blank}$ (each in ml) according to the following formula:

$$[Basic\ surface\ groups] = V1 \cdot \frac{V_{blank} - V_{NaOH}}{V2 \cdot m_{CB}} \cdot 0.05 \cdot 1000$$

The thermally aftertreated carbon blacks A-G were further analyzed by temperature-programmed desorption mass spectrometry (TPD-MS) and compared to a reference sample of the respective carbon black A-G that has not been subjected to thermal aftertreatment as a measure for potential changes to the carbon blacks by the thermal aftertreatment. The temperature programmed desorption (TPD) - mass spectrometry (MS) analysis was conducted as follows: About 100 mg of the respective carbon black sample to be analyzed was weighed in a quartz glass tube with small amount of quartz wool above and below the carbon black sample. The sample tube was transferred into an AutoChem II 2920 instrument (Micromeritics Instrument Corp., Norcross, USA) for temperature programmed spectroscopy. The specimen was subjected under a constant flow of 50 sccm helium gas to a predetermined temperature program (heating at a rate of 10 $K \cdot min^{-1}$ until a temperature of 60 °C was reached, holding for 60 min at 60 °C, heating at a rate of 10 $K \cdot min^{-1}$ until a temperature of 1,000 °C was reached, holding for 30 min at 1,000 °C, cooling at a rate of 90 $K \cdot min^{-1}$ until room temperature was reached). During the measurement, the released amount of gases was detected by a thermal conductivity detector (Signal a.u.) in the effluent stream from the sample chamber. Additionally, the signals for m/z (MS signal a.u.) were recorded with a mass spectrometer Cirrus 3 (MKS Instruments, Andover, USA). The intensities of the peaks indicate how much gas is desorbed. The MS signal enables the identification of the molecule type (mostly water ($H_2O$), m/z = 18, carbon monoxide (CO), m/z = 28, and carbon dioxide ($CO_2$), m/z = 44).

Furthermore, the carbon blacks were analyzed by X-ray photoelectron spectroscopy (XPS) to determine the valance states of carbon and oxygen atoms. Measurements were performed using an ESCA M-Probe from Surface Science Instruments in the ultra-high vacuum of $10^{-10}$-$10^{-9}$ mbar equipped with an Al $K_\alpha$ ($\lambda = 8.33$ Å) X-ray source. Survey spectra were recorded at a detector pass energy of 158.3 eV (0.5 eV step size, 125 ms dwell time, averaged over 25 scans). Spectral calibration was determined by referencing the C-C signal of the C1s spectra to 284.8 eV. Calibration and peak fitting were performed with CasaXPS software from Casa Software Ltd. The backgrounds were corrected with a Shirley line shape. For peak fitting of the C=C bonds, an asymmetric line shape (LA(1,2.5,5)) was used, whereas all other peaks were fitted with a symmetric GL(30).

Preparation of alkaline carbon blacks

The above-identified acidic carbon blacks A-G were each subjected to a thermal aftertreatment. The thermal aftertreatment was carried out in a high-temperature fluidized bed reactor. The setup comprises a vertically arranged tube made of Inconel having a length of 1500 mm and inner diameter of 108 mm defining the reactor chamber. The Inconel tube is enclosed on its outer surface along the long axis by insulation and heating modules made from in total eight Fibrothal semishells (each having a power of 2,500 W), forming four heating zones. A gas flow is introduced at the bottom end of the tube from a connected gas supply system. The first heating zone from the bottom end of the tube is used for heating up the gas flow to the desired temperature, the remaining heating zones are for heating treating material filled into the reactor chamber at the desired temperature. Controlling of the heating shells is done via thermal elements, being positioned between the reactor's external wall and the corresponding heating shell. The temperature in each heating zone is further measured inside the reaction chamber by temperature sensors. Filling of the discontinuous operating fluidized bed is done via the reactor's head. Evaporating gases at the reactor's head are introduced to an exhaust system and a combustion system. After cooling the after-treated carbon black can be filled into a bucket or a bag supported by a pusher.

For the thermal aftertreatment, the reaction chamber of the reactor was filled to about half its volume with the carbon black to be treated, corresponding to an amount of about 500-800 g. The heating modules were then powered (100% power) and the carbon black heated to a temperature of 800 °C under a continuous flow of nitrogen gas (flow rate: 100-120 Nl/h). When the targeted temperature was approached the power supplied to the heating modules was regulated to hold the targeted temperature. The sample was then maintained at the temperature of 800°C for a dwell time of 30 minutes under the continuous flow of nitrogen gas. Subsequently, the heating modules were switched off and the sample was cooled down under the continuous flow of nitrogen gas to a temperature of 100°C. By means of the heating modules, the sample was then maintained at this temperature for 1 hour exposing it herein to a continuous flow of air (air flow: 100-120 Nl/h). Afterwards, the heating modules were switched off again and the sample was cooled down in an air flow of 20 Nl/h to ambient temperature and then taken out of the reactor for characterization and testing of the obtained thermally aftertreated carbon black. In case of carbon black D, the thermal aftertreatment was conducted without the treatment step at a temperature of 100°C. This sample was directly cooled under a continuous flow of nitrogen gas (flow rate:20 Nl/h) down to ambient temperature after the dwell time at a temperature of 800°C and was then exposed to air and removed from the reactor for characterization and testing of the obtained thermally aftertreated carbon black.

The carbon blacks thus obtained by thermal aftertreatment of carbon blacks A-G were analyzed by the methods as described above. The results are summarized in Table 2.

Table 2

| Thermally aftertreated CB | Ash content [wt.%] | Moisture content [wt.%] | OAN [ml/100g] | BET [m²/g] | STSA [m²/g] | Volatile content [wt.%] | pH | Basic surface groups [mmol/kg] | OAN/ volatile content |
|---|---|---|---|---|---|---|---|---|---|
| A | 0.73 | 1.1 | 175 | 318 | 208 | 3.2 | 7.8 | 164 | 54.7 |
| B | 0.54 | 0.7 | 206 | 593 | 249 | 3.2 | 8.5 | 420 | 64.4 |
| C | 0.98 | 0.7 | >220* | 649 | 278 | 4.0 | 8.7 | 441 | >55 |
| D | 0.20 | 0.7 | 141 | 119 | 99 | 2.0 | 9.8 | 64 | 70.5 |
| E | 0.40 | 0.5 | 136 | 260 | 101 | 2.1 | 9.8 | 200 | 64.8 |
| F | 0.62 | 0.9 | 137 | 200 | 96 | 2.0 | 9.8 | 114 | 68.5 |
| G | 0.37 | 0.7 | 143 | 625 | 345 | 1.5 | 9.8 | 319 | 95.3 |
| *: exceeding the limit of the device used to measure the CAN | | | | | | | | | |

The results in Table 2 show that alkaline carbon blacks (pH > 7) having predominantly basic surface groups were successfully produced via the thermal aftertreatment. The thermal aftertreatment effectively converted the initially acidic carbon blacks A-G into alkaline carbon blacks having a notable content of titratable basic surface groups and measured pH ranging from about 7.8 to 10. The prepared alkaline carbon blacks exhibited a ratio OAN (in ml/100g)/volatile content (in wt.%) greater than 50, namely from about 55 to 95, which is significantly greater than for the initial acidic carbon blacks.

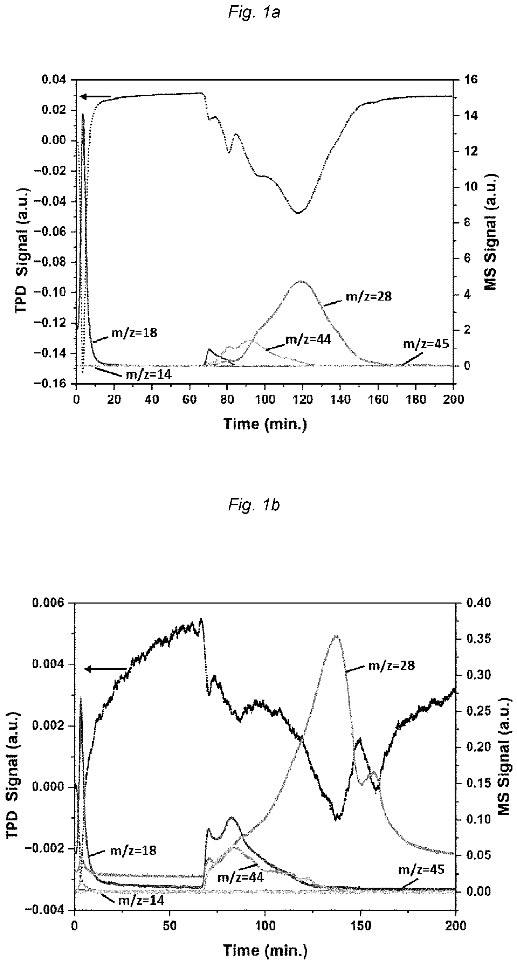

Furthermore, the carbon blacks were investigated by TPD-MS analysis as set forth above. Exemplarily, TPD-MS spectra of the non-heat treated carbon black C as a reference and carbon black C after the above-described thermal treatment are presented in Fig. 1a and Fig. 1b, respectively. The TPD-MS spectrum of the thermally aftertreated carbon black (Fig. 1b) shows in contrast to the non-heat treated reference (Fig. 1a) nearly no decomposition to $CO_2$, indicating substantial removal of acidic groups from the surface. For the thermally aftertreated carbon black, the decomposition to CO at higher temperatures is predominant, indicating the presence of basic pyrone groups as thermally relatively more stable groups. The thermal aftertreatment removes in total oxygen-containing surface groups from the carbon black, but mainly acidic surface groups, whereas the majority of basic groups remain such that in the thermally aftertreated carbon black basic groups (pyrone groups) prevail and determine the pH of the carbon black.

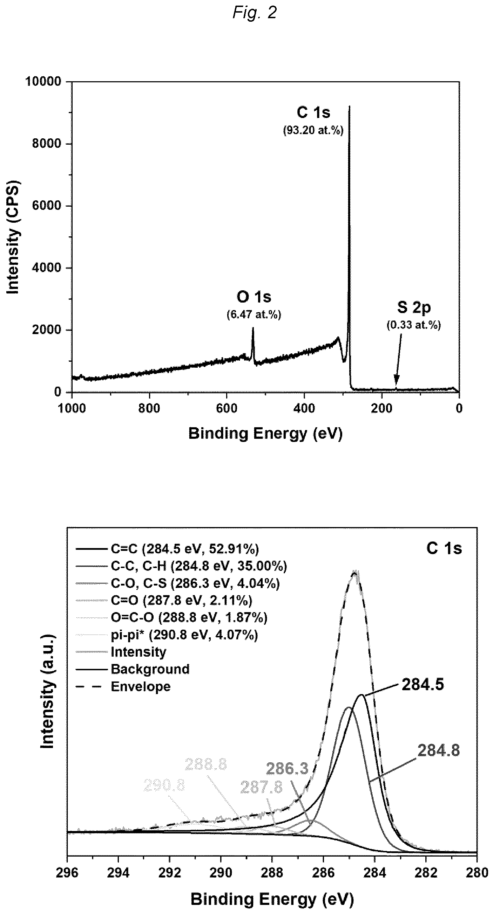

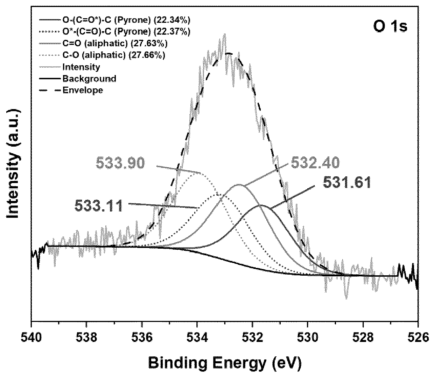

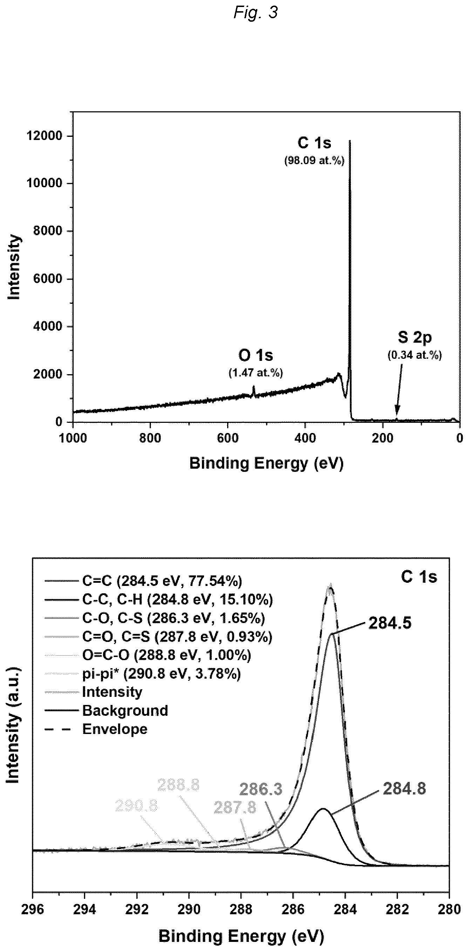

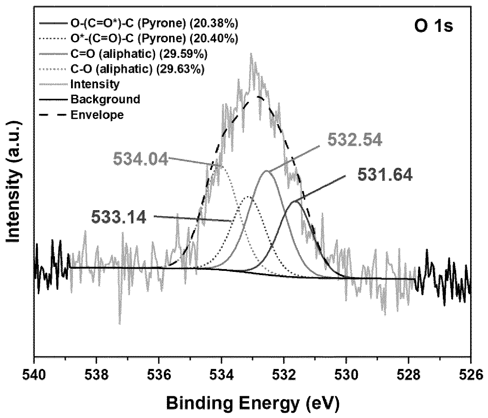

The investigated carbon blacks were also analyzed by X-ray photoelectron spectroscopy (XPS) as set forth above. Exemplarily, X-ray photoelectron survey and high resolution (HR) C1s and O1s spectra (XPS) of the non-heat treated carbon black C as a reference and carbon black C after the above-described thermal treatment are presented in Fig. 2 and Fig. 3, respectively. According to the HR C1s spectra of the reference carbon black (Fig. 2), bonds of C=C, C-C, C-R, C=R, and O-C=O (R = O, S) were detected. The detected sulfur is believed to be due to some doping effects in the product and remained the same after the thermal aftertreatment. The ratio between $sp^2$ and $sp^3$-hybridized carbon atoms was calculated to be 1.51, which points at the presence of aliphatic functional groups. Following the thermal aftertreatment (Fig. 3), the amount of oxygen-containing groups notably decreased (oxygen content determined from XPS: 6.47 at.% (for the non-heat-treated sample) versus 1.47 at.% (for the heat-treated sample) and the calculated $sp^2$/$sp^3$ ratio increased from 1.51 to 5.14. The relative increase in C=C bonds and the proportion of $sp^2$-hybridized carbon may be observed as a result from the decomposition of oxygen-containing functional groups and the rearrangement of carbon atoms to aromatic carbon rings. Moreover, from the survey and HR O1s XPS spectra measured for the heat-treated Carbon Black C, the amount of oxygen bound in pyrone groups was calculated following the analysis described above using equation (1) to be:

$$A = 1.47 \text{ at.\%} * (20.38 \% + 20.40\%)/100 = 0.60 \text{ at.\%}$$

indicating the presence of a substantial amount of pyrone groups in the heat treated carbon black.

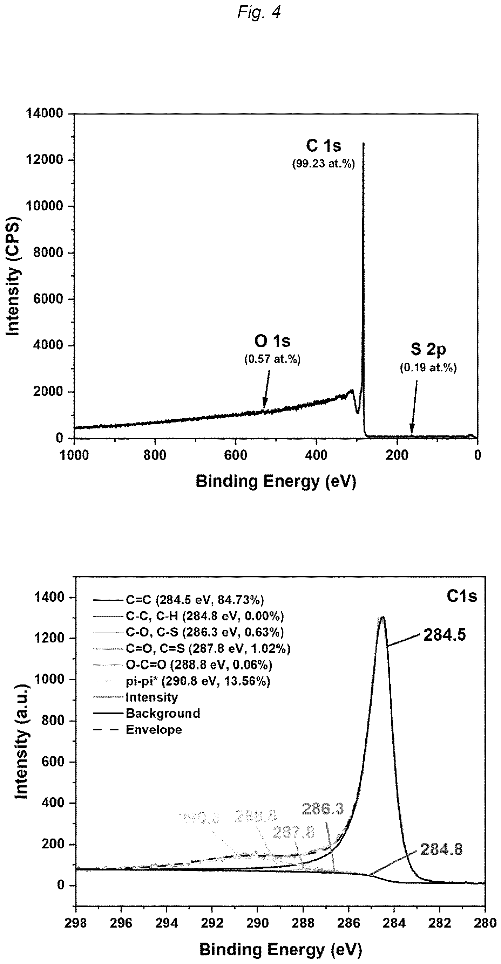

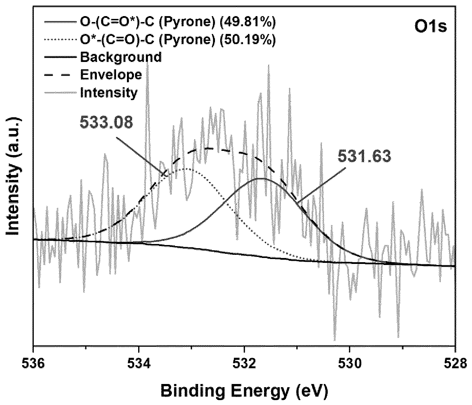

Carbon blacks A-G were moreover subjected to a thermal aftertreatment at higher temperature. The thermal aftertreatment was conducted as described above, except for heating the carbon black to a temperature of 900 °C instead of 800°C. This thermal aftertreatment likewise resulted in the formation of alkaline carbon blacks. Fig. 4 shows exemplarily the X-ray photoelectron (XPS) survey and high resolution C1s and O1s spectra for carbon black C after the thermal treatment at 900°C. The thermal aftertreatment at the higher temperature caused a further decrease of the oxygen-containing groups. Additionally, no $sp^3$-hybridized carbon atoms were detected anymore, indicating a complete re-arrangement to $sp^2$-hybridized carbon atoms. The O1s spectrum further shows a signal formed from overlapping doublet peaks at 531.63 eV and 533.08 eV fully attributable to pyrone groups. This evidences that the oxygen-containing surface groups remaining after the thermal aftertreatment of the carbon black consist of basic pyrone groups. From the survey and HR O1s XPS spectrum measured for the Carbon Black C heat-treated at 900°C, the amount of oxygen bound in pyrone groups was calculated following the analysis described above using equation (1) to be:

$$A = 0.57 \text{ at.\%} * (49.81\% + 50.19\%)/100 = 0.57 \text{ at.\%}$$

indicating the presence of a substantial amount of pyrone groups also in the carbon black treated at a higher temperature of 900°C.

The carbon blacks were also investigated for their content of oxygenated PAHs such as nitro-PAHs. For example, the content of nitro-PAHs (determined as nitro-PAH8 content) was determined for the carbon black E having the properties shown in Table 1 above and the thermally aftertreated carbon black E having the properties shown in Table 2 above to illustrate the effect of the thermal aftertreatment on the content of nitro-PAHs.

The nitro-PAH8 content of the carbon blacks was determined following the method entitled "Determination of PAH content of Carbon Black", dated July 8, 1994, as developed by Cabot Corp., and incorporated by the American Food and Drug Administration (FDA) in the U.S. Code of Federal Regulations (CFR) 21 Sec.178.3297, adopted to nitro-PAHs, as follows:

The carbon black material was crushed in a mortar with a pestle until a homogenous powder was obtained. A suitable amount (up to 10 g) of the powder was precisely weighed in a cellulose extraction thimble (MN 645, Macherey-Nagel, Düren, Germany). A glass wool plug and cellulose pieces from an extraction thimble were put on top of the carbon black and the filled thimble then loaded in the extraction chamber of a 100 mL Soxhlet apparatus with a 250 mL round bottom flask. Toluene was added to the flask and the condenser of the apparatus was gently flushed with nitrogen. The sample was then subjected to Soxhlet extraction with toluene in the Soxhlet apparatus for 48 h under light protection at a rate of approx. 10 cycles per hour. The obtained raw extract was then concentrated to slightly over 5 mL by means of a rotary evaporator operated at 40°C and a pressure reduction of 5 kPa as a minimum (Büchi Rotavapor R-200, Büchi Labortechnik AG, 9230 Flawil, Switzerland). The extract was then transferred to a 10 mL volumetric flask and brought to the mark by adding fresh toluene. To an aliquot of the extract were added as internal standards two deuterated nitro-PAHs ($D_5$-3-Nitrofluoranthene and $D_9$-1-Nitropyrene in an amount of 250 ng each). The thus obtained solution was then used for HRGC/LRMS analysis (Capillary gas chromatography coupled with low resolution mass spectrometry) for nitro-PAH identification and quantification using the following instrumentation and conditions: Thermo Scientific GC-Ultra 2000 with PTV injector, GC-column: 30 m DB5-MS, 0.25 mm ID, 0.1 $\mu$m film thickness, temperature program GC oven: preheating oven to 80°C, sample injection, holding for 3 min and 42 seconds at 80°C, heating with a rate of 35°C/min to 180°C, heating with a rate of 6°C/min to 290°C, hold at 290°C for 37 seconds; mass spectrometer: Thermo Scientific MAT 95 HRMS, operated in the electron impact mode (EI) and Selected Ion Monitoring (SIM Mode); mass resolution: <8.000 amu, monitoring of molecular and fragment ions for the individual nitro-PAH compounds. Calibration check of the HRMS instrument was performed for each analysis sequence by injection of mixtures containing the 8 nitro-PAHs and the above-mentioned 2 deuterated standards. Identification of the nitro-PAH species was achieved by analysis of the relative retention time, the molecular and fragment ions, and the fragmentation ratio. Quantification was performed using the instrumentation software via the deuterated internal nitro-PAHs using the isotope dilution and internal standard method.

The results of the determination of the nitro-PAH8 content is shown below in Table 3.

Table 3

|  | Amount in Carbon Black E (ppm) | Amount in thermally aftertreated Carbon Black E (ppm) |
|---|---|---|
| 1-Nitronaphthalene | 16.4 | < 0.01 |
| 2-Nitronaphthalene | 2.28 | < 0.01 |
| 9-Nitrophenanthrene | 23.7 | < 0.01 |
| 3-Nitrofluoranthene | 10.0 | < 0.01 |
| 1-Nitropyrene | 3.38 | < 0.01 |
| 1,3-Dinitropyrene | < 2 | < 0.02 |
| 1,6-Dinitropyrene | < 3 | < 0.02 |
| 4-Nitrobiphenyl | 1.37 | < 0.01 |
| **Nitro-PAH8 class:** | **62.1** | **0.100** |

The results in Table 3 illustrate that the alkaline carbon blacks of the present invention can have a very low level of nitro-PAH contaminants, significantly less than the corresponding acidic carbon blacks, which can be desirable to reduce or avoid the potential toxicity and environmental impact attributed to oxygenated PAHs.

Preparation and testing of solvent- and water-borne compositions with prepared alkaline carbon blacks

Preparation Example 1

Non-heat treated carbon black C having the properties as set forth in Table 1 above, as a reference, and the alkaline carbon black C having the properties as set forth in Table 2 above, obtained by the above-described thermal treatment, were each used and tested in a standard water-borne polyurethane-based coating formulation. The ingredients and their respective amounts used in the millbase preparation of the water-borne coating composition are shown in Table 4.

Table 4

|  | Example 1A (Comparative) | Example 1B |
|---|---|---|
| **Component** | **Amount [g]** | **Amount [g]** |
| Deionized water | 48.4 | 48.4 |
| TEGO Dispers 760 W[1] | 20.8 | 20.8 |
| TEGO FOAMEX 830[2] | 0.3 | 0.3 |
| N,N-dimethylethanolamine (DMEA) | 0.1 | 0.1 |
| Carbon Black C | 10.4 | - |
| thermally aftertreated Carbon black C | - | 10.4 |
| Total | 80.0 | 80.0 |
| Total carbon black concentration [%] | 13.0 | 13.0 |

[1]: Wetting and dispersing agent, commercially available from Evonik Operations GmbH, Germany, active matter content about 35%
[2]: Defoamer, commercially available from Evonik Operations GmbH, Germany

To prepare the millbases, the components were added to a beaker in the amounts listed in Table 4 and pre-dispersed using a Pendraulik LR 34 dissolver for 5 minutes at 4000 RPM. After the pre-dispersion, the pH of the thus obtained millbase composition was measured using a Metrohm 780 pH Meter with the electrode Pt 1000/B/2/3M KCl and the number of drops of additional DMEA necessary to be added to achieve a targeted pH in a range from 8.7 to 9.2 was determined. The measured pH and determined number of drops of additional DMEA necessary to achieve the targeted pH range are shown in Table 5.

Table 5

|  | Comparative Example 1A | Example 1B |
|---|---|---|
| pH (as-prepared) | 2.6 | 9.2 |
| Additional drops of DMEA added | 34 | 0 |
| pH (after addition of DMEA) | 9.0 | 9.2 |

As can be seen from Table 5, the as-prepared millbase composition of Comparative Example 1A exhibited due to the acidic nature of used carbon black C a strongly acidic pH of 2.6, well below the targeted pH range. A substantial amount of additional amine (DMEA) had to be added to achieve the targeted pH range. On the contrary, the millbase composition of Example 1B prepared using the alkaline thermally aftertreated carbon black C exhibited a pH of 9.2, i.e. within the targeted pH range, without a need for additional amine. This illustrates that the use of potentially harmful basic substances for pH control such as organic amines like dimethylethanolamine can be reduced in the formulation of pigmented water-borne compositions by use of an alkaline carbon black of the present invention. This is advantageous from an environmental and health perspective as well as from an economic point of view.

After the pre-dispersion and adjustment of the pH, 540 g of the steelbeads (size dia. 3mm) were added and the samples were dispersed using a Lau Shaker DAS 200 for 60 min. After having separated the beads from the paste, the pH-value of the thus obtained millbase was measured again. The pH measured for Comparative Example 1A as well as Example 1B was each 8.4.

The final water-borne coating formulations were prepared by mixing the respective millbase with a letdown in a speedmixer for 2 minutes at 2000 RPM. The letdown was prepared by mixing 75.8 parts by weight of Alberdingk® U 9800 (aliphatic polyester polyurethane dispersion, 35% solids content), 13 parts by weight butyl glycol, 10 parts by weight of deionized water, 1 part by weight of additives (wetting agent, defoamer) and 0.2 parts by weight of DMEA. The millbase and letdown were used in relative amounts yielding a concentration of 1.5 wt.% of the respective carbon black, based on the coating formulation. The obtained formulations were applied on glass panels by a bar applicator (slot height: 200 $\mu$m) and dried at room temperature for 15 min. Afterwards, the panels were dried in an oven for 15 minutes at 60°C and then used for coloristic measurements.

Preparation Example 2

Non-heat treated carbon blacks E and F having the properties as set forth in Table 1 above, as references, and the alkaline carbon blacks E and F having the properties as set forth in Table 2 above, obtained by the above-described thermal treatment, were each used and tested in a standard solvent-borne coating formulation. The ingredients and their respective amounts used in the millbase preparation of the solvent-borne coating composition are shown in Table 6.

Table 6

|  | Example 2A (Comparative) | Example 2B | Example 2C (Comparative) | Example 2D |
|---|---|---|---|---|
| Component | Amount [g] | Amount [g] | Amount [g] | Amount [g] |
| Setal F 310 SN[1] | 53.9 | 53.9 | 53.9 | 53.9 |
| Shellsol A[2] | 18.0 | 18.0 | 18.0 | 18.0 |
| Carbon Black E | 8.1 | - | - | - |
| thermally aftertreated Carbon black E | - | 8.1 | - | - |
| Carbon Black F | - | - | 8.1 | - |
| thermally aftertreated Carbon black F | - | - | - | 8.1 |
| Total | 80.0 | 80.0 | 80.0 | 80.0 |

(continued)

| | Example 2A (Comparative) | Example 2B | Example 2C (Comparative) | Example 2D |
|---|---|---|---|---|
| Component | Amount [g] | Amount [g] | Amount [g] | Amount [g] |
| Total carbon black concentration [%] | 10.1 | 10.1 | 10.1 | 10.1 |
| [1]: Resin, commercially available from Allnex Germany GmbH, active matter content about 60% [2]: Solvent, commercially available from Kremer Pigmente GmbH & Co. KG, Germany | | | | |

To prepare the millbases, the components were added to a beaker in the amounts listed in Table 6 and pre-dispersed by dissolver Pendraulik LR 34 for 5 minutes at 4000 RPM. During the pre-dipersion the beaker with the sample was tighly closed to avoid the evaporation of solvents.

After the pre-dispersion, 550 g of steelbeads (size dia. 2mm) were added and the samples were dispersed on a Lau Shaker DAS 200 for 60 min. Afterwards the steelbeads were separated from the paste to obtain the millbase.

The viscosity of the prepared millbase was determined using an Anton Paar MCR 102e device with 60 mm stainless steel bottom plate and top cone plate (cone angle 2°, diameter 50 mm) at a shear rate of 800 s$^{-1}$ at ambient temperature. As discernible from Table 7 the viscosities determined for Examples 2B and 2D were higher than for Comparative Examples 2A and 2C, respectively. This may be helpful for the formulation and/or processing of some coating compositions.

Table 7

| | Comparative Example 2A | Example 2B | Comparative Example 2C | Example 2D |
|---|---|---|---|---|
| Viscosity [mPa·s] @ shear rate of 800 s$^{-1}$ | 971 | 1555 | 772 | 1221 |

Final solvent-borne coating formulations were then prepared by mixing the respective millbase with a letdown in a speedmixer for 2 minutes at 2000 RPM. The letdown was prepared by mixing 47 parts by weight of Setal® F 310 SN (alkyd resin, 60% solids content), 31 parts by weight of Maprenal® MF800/55IB (Isobutylated melamine formaldehyde resin, 55% solids content) and 22 parts by weight of a thinner composition. The thinner composition was prepared by mixing 545.5 parts by weight of xylene, 109.1 parts by weight of ethoxypropanol, 72.7 parts by weight of butanol, 36.4 parts by weight of Borchi® Gol OL17 (flow promoter, commercially available from Borchers) and 36.4 parts by weight of butyl glycol acetate. The millbase and letdown were used in relative amounts yielding a concentration of 2.2 wt.% of the respective carbon black, based on the coating formulation. The obtained formulations were applied on glass panels by a bar applicator (slot height: 100 μm) and dried at room temperature for 15 min. Afterwards, the panels were dried in an oven for 15 minutes at 130°C and then used for coloristic measurements.

Coloristic characteristics of the thus obtained films prepared from the aqueous and solvent-borne coating compositions according to Preparation Examples 1 respectively 2 were measured using a Pausch Q - Color 35 spectrophotometer (45°/0° spectrophotometer) and the BCSWIN software. The measurement is made through the glass after calibration with a white calibration tile and a black hollow body. The spectrometer averages over five individual measurements for each sample.

The hue-independent black value $M_Y$ and hue-dependent black value Mc are calculated as follows from the tristimulus (XYZ) data derived from the measurement:

The hue-independent black value $M_Y$ is calculated according to equation 2 from the tristimulus component Y of the measurement (illuminant D65/10°):

$$M_Y = 100 \cdot \log \left( \frac{100}{Y} \right) \qquad (2)$$

Subsequently, the hue-dependent black value is calculated according to equation 3:

$$M_c = 100 \cdot \log \left( \log \left( \frac{X_n}{X} \right) - \log \left( \frac{Z_n}{Z} \right) + \log \left( \frac{Y_n}{Y} \right) \right) \qquad (3)$$

wherein $X_n/Z_n/Y_n$ (DIN6147) are tristimulus values of the coordinate origin, based on the illuminant and the observer (DIN5033/ part 7/ illuminant D65/10°) with $X_n$ = 94.81 $Z_n$ = 107.34 $Y_n$ = 100.0.

The absolute hue contribution dM is calculated according to equation 4 from the black values Mc and $M_Y$:

$$dM = M_c - M_Y \qquad (4).$$

The thus obtained coloristic characteristics determined for the water-borne coating compositions according to Comparative Example 1A and Example 1B are set forth in Table 8 below.

Table 8

|  | Jetness $M_Y$ | Undertone dM |
|---|---|---|
| Comparative Example 1A | 282 | 7.1 |
| Example 1B | 282 | 6.7 |

The coloristic characteristics determined for the solvent-borne coating compositions according to Comparative Examples 2A and 2C and Examples 2B and 2D are set forth in Table 9 below.

Table 9

|  | Jetness $M_Y$ | Undertone dM |
|---|---|---|
| Comparative Example 2A | 246 | -1.1 |
| Example 2B | 269 | 0.5 |
| Comparative Example 2C | 245 | -1.3 |
| Example 2D | 269 | -0.1 |

As can be seen from Tables 8 and 9 the coating compositions containing the alkaline carbon blacks according to the present invention yielded equivalent or even greater jetness and comparable undertone compared to the corresponding coating compositions containing respective reference acidic carbon blacks. This applies to both water-based and solvent-based compositions. These results illustrate the potential of the alkaline carbon blacks according to the present invention to provide similar or even improved coloristic performance and be used as a substitute to conventional acidic carbon blacks in various compositions and materials.

**Claims**

1. An alkaline gas black or oxidatively aftertreated carbon black having a pH as determined according to ASTM D1512-21 (Test Method B - Sonic Slurry) of greater than 7 and a ratio of oil absorption number (OAN) (in ml/100g), determined according to ASTM D2414-23, to volatile content (in wt.%), determined by heating to 950 °C according to DIN 53552:2023-07, of 50 or more.

2. The alkaline black according to claim 1, wherein the ratio of oil absorption number (OAN) (in ml/100g), determined according to ASTM D2414-23, to volatile content (in wt.%), determined by heating to 950 °C according to DIN 53552:2023-07, is in a range from 50 to 200, such as from 60 to 120.

3. The alkaline black of any one of claims 1 or 2 comprising titratable basic surface groups, preferably in an amount of at least 100 mmol/kg, such as in a range from 100 to 1,000 mmol/kg or from 100 to 500 mmol/kg, wherein the titratable basic surface groups preferably comprise pyrone groups.

4. The alkaline black of any one of claims 1 to 3, wherein the alkaline black has a pH as determined according to ASTM D1512-21 (Test Method B - Sonic Slurry) of 7.5 or more, such as in a range from 7.5 to 11.0.

5. The alkaline black of any one of claims 1 to 4 having a ratio of $sp^2$ hybridized carbon atoms to $sp^3$ hybridized carbon atoms of 2.0 or more, such as 5.0 or more.

6. The alkaline black of any one of claims 1 to 5, wherein the alkaline black has one or more than one or all of the following:

   a. an ash content determined according to ASTM D1506-15 of 3 wt.% or less, or 2 wt.% or less, or 1 wt.% or less,
   b. a moisture content determined according to ASTM D1509-18 of 3 wt.% or less, or 2 wt.% or less, or 1 wt.% or less,
   c. a carbon content as determined by elemental analysis of 90 wt.% or more, 95 wt.% or more, 97 wt.% or more, or 98 wt.% or more,
   d. an oxygen content as determined by elemental analysis of 5 wt.% or less, or 3 wt. % or less, or 2 wt. % or less,
   e. a BET surface area, determined according to ASTM D6556-21, in a range from 30 to 1,000 $m^2$/g, such as in a range from 100 to 700 $m^2$/g,
   f. a statistical thickness surface area (STSA), determined according to ASTM D6556-21, in a range from 30 to 550, such as in a range from 90 to 350 $m^2$/g,
   g. a ratio of BET surface area /STSA in a range from 1 to 4, such as from 1.1 to 2.6,
   h. an oil absorption number (OAN) (in ml/100g), determined according to ASTM D2414-23, of 50 ml/100 g or more, such as in a range from 50 ml/100 g to 300 ml/100 g, and/or
   i. a volatile content (in wt.%), determined by heating to 950 °C according to DIN 53552:2023-07, of 0.5 wt.% or more, such as in a range from 0.5 wt.% to 5 wt.%.

7. The alkaline black of any one of claims 1 to 6, wherein the alkaline black has a nitro-PAH content of 1 ppm or less, such as 0.5 ppm or less, such as 0.2 ppm or less, such as 0.1 ppm or less and/or an oxy-PAH content of 1 ppm or less, such as 0.5 ppm or less, such as 0.2 ppm or less, such as 0.1 ppm or less.

8. A process for producing an alkaline black according to any one of claims 1 to 7, the process comprising:

   (a) providing an acidic carbon black comprising an initial content of titratable acidic surface groups, wherein providing the acidic carbon black comprises manufacturing gas black by the gas black production process or comprises manufacturing carbon black by a carbon black production process and subjecting the produced carbon black to an oxidative aftertreatment, and
   (b) subjecting the acidic carbon black to a thermal aftertreatment comprising heat treating the acidic carbon black in an inert atmosphere to reduce the content of titratable acidic surface groups to form the alkaline black, wherein the inert atmosphere preferably comprises an inert gas such as nitrogen, argon, or mixtures thereof.

9. The process according to claim 8, wherein the acidic carbon black provided in step (a) has one or more than one or all of the following:

   a. a pH as determined according to ASTM D1512-21 (Test Method B - Sonic Slurry) of 6 or less, such as 3.5 or less,
   b. an initial content of titratable acidic surface groups of 200 mmol/kg or more, such as 400 mmol/kg or more, or 1,000 mmol/kg or more,
   c. a volatile content (in wt.%), determined by heating to 950 °C according to DIN 53552:2023-07 of greater than 0.8 wt.%
   d. an ash content determined according to ASTM D1506-15 of 3 wt.% or less, or 2 wt.% or less, or 1 wt.% or less, or 0.5 wt.% or less, or 0.1 wt.% or less,
   e. a moisture content determined according to ASTM D1509-18 of 10 wt.% or less, or 7 wt.% or less, or 5 wt.% or less,
   f. a carbon content as determined by elemental analysis of 80 wt.% or more, 85 wt.% or more, 90 wt.% or more, or 95 wt.% or more, or 97 wt.% or more, or 98 wt.% or more,
   g. an oxygen content as determined by elemental analysis of 20 wt.% or less, 15 wt.% or less, 10 wt.% or less, or 7 wt.% or less, or 5 wt.% or less,
   h. a BET surface area, determined according to ASTM D6556-21, in a range from 30 to 1,000 $m^2$/g, such as in a range from 100 to 700 $m^2$/g,
   i. a statistical thickness surface area (STSA), determined according to ASTM D6556-21, in a range from 30 to 550, such as in a range from 90 to 350 $m^2$/g,
   j. a ratio of BET surface area /STSA in a range from 0.8 to 4, such as from 1.1 to 2.5,
   k. a ratio of oil absorption number (OAN) (in ml/100g), determined according to ASTM D2414-18, to volatile content (in wt.%), determined by heating to 950 °C according to DIN 53552:2023-07, of less than 90, such as 40 or less, or 30 or less.

10. The process of claim 8 or 9, wherein the oxidative aftertreatment in step (a) utilizes a gaseous oxidizing agent, wherein the oxidizing agent preferably comprises NO$_x$, ozone, or a combination thereof.

11. The process of any one of claims 8 to 10, wherein the thermal aftertreatment in step (b) comprises heat treating the acidic carbon black in the inert atmosphere at a temperature of 500°C or more, such as 600°C or more, or 700°C or more, or 800°C or more, and/or not more than 1,200°C, such as not more than 1,100°C, or not more than 1,000°C, for example at a temperature in a range from 500°C to 1,000°C, preferably from 800°C to 1,000°C, and/or wherein heat treating of the acidic carbon black in the inert atmosphere in step (b) is conducted for a time of at least 1 minute, such as a time of at least 1 hour and/or of up to 72 hours.

12. The process of any one of claims 8 to 11, wherein the thermal aftertreatment in step (b) further comprises heat treating the carbon black that has been heat treated in the inert atmosphere in an oxygen-containing atmosphere, such as air, at a lower temperature than used for the heat treatment in the inert atmosphere, wherein heat treating the carbon black in the oxygen-containing atmosphere is preferably conducted at a temperature in a range from 40°C to 300°C, such as from 50°C to 150°C, such as from 80°C to 120°C, and/or for a time of at least 1 min, such as a time of at least 1 hour and/or of up to 72 hours.

13. A composition comprising an alkaline black according to any one of claims 1 to 7, for example produced by the process according to any one of claims 8 to 12, the composition preferably comprising a plastic or rubber composition, a paint, ink or coating composition or electrode composition.

14. An article made from an alkaline black according to any one of claims 1 to 7 or a composition according to claim 13.

15. Use of an alkaline black according to any one of claims 1 to 7 as pigment, conductive agent or reinforcing filler, for example for the manufacture of plastic or rubber articles, paints, inks, coatings, electrodes or energy storage.

*Fig. 1a*

*Fig. 1b*

*Fig. 2*

*Fig. 3*

*Fig. 4*

Europäisches
Patentamt

European
Patent Office

Office européen
des brevets

# EUROPEAN SEARCH REPORT

**Application Number**

EP 23 20 7988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/042994 A1 (ORION ENG CARBONS GMBH [DE]) 3 March 2022 (2022-03-03) | 1,2,4,6, 13-15 | INV.<br>C08K3/04 |
| A | * paragraphs [0006] – [0009]; claims 1-20 * | 3,5,7-12 | C09C1/48<br>C09C1/50<br>C09C1/56 |
| A | US 2011/076608 A1 (BERGEMANN KLAUS [DE] ET AL) 31 March 2011 (2011-03-31)<br>* paragraphs [0020] – [0068], [0100] – [0113], [0125]; claims 3,4,6-14; table 3 * | 1-15 | |
| A | JP S61 215665 A (DENKI KAGAKU KOGYO KK) 25 September 1986 (1986-09-25)<br>* page 477 – page 482; claim 1; table 2 * | 1-15 | |

**TECHNICAL FIELDS SEARCHED (IPC)**

C08K
C09D
C09C

The present search report has been drawn up for all claims

| Place of search | Date of completion of the search | Examiner |
|---|---|---|
| The Hague | 15 April 2024 | Konstantopoulos, G |

EPO FORM 1503 03.82 (P04C01)

**EP 4 549 505 A1**

## ANNEX TO THE EUROPEAN SEARCH REPORT
## ON EUROPEAN PATENT APPLICATION NO.

EP 23 20 7988

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2024

| Patent document cited in search report | Publication date | Patent family member(s) | Publication date |
|---|---|---|---|
| WO 2022042994 A1 | 03-03-2022 | BR 112023002782 A2 | 14-03-2023 |
| | | CN 116075548 A | 05-05-2023 |
| | | EP 3960491 A1 | 02-03-2022 |
| | | EP 4204241 A1 | 05-07-2023 |
| | | JP 2023540029 A | 21-09-2023 |
| | | KR 20230054825 A | 25-04-2023 |
| | | TW 202219145 A | 16-05-2022 |
| | | US 2023348728 A1 | 02-11-2023 |
| | | WO 2022042994 A1 | 03-03-2022 |
| US 2011076608 A1 | 31-03-2011 | BR PI1003601 A2 | 22-01-2013 |
| | | CN 102060281 A | 18-05-2011 |
| | | DE 102009045060 A1 | 31-03-2011 |
| | | EP 2302004 A1 | 30-03-2011 |
| | | ES 2688478 T3 | 02-11-2018 |
| | | HU E040461 T2 | 28-03-2019 |
| | | JP 6086641 B2 | 01-03-2017 |
| | | JP 2011068892 A | 07-04-2011 |
| | | KR 20110034554 A | 05-04-2011 |
| | | PL 2302004 T3 | 31-01-2019 |
| | | RU 2010139583 A | 20-04-2012 |
| | | TW 201125935 A | 01-08-2011 |
| | | US 2011076608 A1 | 31-03-2011 |
| | | ZA 201006865 B | 29-06-2011 |
| JP S61215665 A | 25-09-1986 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PETER P. FU** ; **DIOGENES HERRENO-SAENZ**. Nitro-polycyclic aromatic hydrocarbons: A class of genotoxic environmental pollutants. *Journal of Environmental Science and Health, Part C: Environmental Carcinogenesis and Ecotoxicology Reviews*, 1999, vol. 17 (6), 1-43
- **A. CLERGÉ** ; **J. LE GOFF** ; **C. LOPEZ** ; **J. LEDAUPHIN** ; **R. DELÉPÉE**. Oxy-PAHs: occurrence in the environment and potential genotoxic/mutagenic risk assessment for human health. *Critical Reviews in Toxicology*, 2019
- **J.-B. DONNET et al.** Carbon Black: Science and Technology
- *CHEMICAL ABSTRACTS*, 86-57-7
- *CHEMICAL ABSTRACTS*, 581-89-5
- *CHEMICAL ABSTRACTS*, 954-46-1
- *CHEMICAL ABSTRACTS*, 892-21-7
- *CHEMICAL ABSTRACTS*, 5522-43-0
- *CHEMICAL ABSTRACTS*, 75321-20-9
- *CHEMICAL ABSTRACTS*, 42397-64-8
- *CHEMICAL ABSTRACTS*, 92-93-3
- *CHEMICAL ABSTRACTS*, 84-11-7
- *CHEMICAL ABSTRACTS*, 3074-00-8
- *CHEMICAL ABSTRACTS*, 82-05-3
- *CHEMICAL ABSTRACTS*, 3074-03-01
- *CHEMICAL ABSTRACTS*, 486-25-9
- *CHEMICAL ABSTRACTS*, 5737-13-3
- Determination of PAH content of Carbon Black. Cabot Corp., 08 July 1994